(19) Europäisches Patentamt
European Patent Office
Office européen des brevets

(11) **EP 3 873 784 B1**

(12) **EUROPÄISCHE PATENTSCHRIFT**

(45) Veröffentlichungstag und Bekanntmachung des Hinweises auf die Patenterteilung:
**06.11.2024   Patentblatt 2024/45**

(21) Anmeldenummer: **19801736.0**

(22) Anmeldetag: **30.10.2019**

(51) Internationale Patentklassifikation (IPC):
**B60W 30/10** (2006.01)       **B60W 50/00** (2006.01)
**B60W 30/18** (2012.01)       **B60W 60/00** (2020.01)

(52) Gemeinsame Patentklassifikation (CPC):
**B60W 30/10; B60W 30/18163; B60W 50/0097; B60W 60/001;** B60W 2554/80

(86) Internationale Anmeldenummer:
**PCT/EP2019/079696**

(87) Internationale Veröffentlichungsnummer:
**WO 2020/089311 (07.05.2020 Gazette 2020/19)**

(54) **STEUERUNGSSYSTEM UND STEUERUNGSVERFAHREN ZUM SAMPLINGBASIERTEN PLANEN MÖGLICHER TRAJEKTORIEN FÜR KRAFTFAHRZEUGE**

CONTROL SYSTEM AND CONTROL METHOD FOR SAMPLING-BASED PLANNING OF POSSIBLE TRAJECTORIES FOR MOTOR VEHICLES

SYSTÈME DE COMMANDE ET PROCÉDÉ DE COMMANDE DE PLANIFICATION, SUR LA BASE D'ÉCHANTILLONNAGES, DE TRAJECTOIRES POSSIBLE POUR DES VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2018   DE 102018008624**

(43) Veröffentlichungstag der Anmeldung:
**08.09.2021   Patentblatt 2021/36**

(73) Patentinhaber: **ZF Automotive Germany GmbH 73553 Alfdorf (DE)**

(72) Erfinder:
• **LIENKE, Christian**
  **44141 Dortmund (DE)**
• **WISSING, Christian**
  **44147 Dortmund (DE)**
• **SCHMIDT, Manuel**
  **44225 Dortmund (DE)**
• **HOMANN, Andreas**
  **44369 Dortmund (DE)**
• **BERTRAM, Torsten**
  **40547 Düsseldorf (DE)**
• **BUSS, Markus**
  **40477 Düsseldorf (DE)**
• **KELLER, Martin**
  **40883 Ratingen (DE)**
• **GLANDER, Karl-Heinz**
  **40789 Monheim (DE)**

(74) Vertreter: **Ege Lee & Roider Patentanwälte Wilhelm-Wagenfeld-Straße 24 80807 München (DE)**

(56) Entgegenhaltungen:
DE-A1- 102015 217 891       DE-A1- 102016 205 442
DE-A1- 102016 211 129

• **T. SARTINI ET AL: "A resolution-adaptive strategy for probabilistic motion planning", WORLD AUTOMATION CONGRESS, 2002. PROCEEDINGS OF THE 5TH BIANNUAL   JUNE 9-13, 2002, 1 January 2002 (2002-01-01), pages 591 - 596, XP055656555, ISBN: 978-1-889335-18-6, DOI: 10.1109/WAC.2002.1049501**

**Beschreibung**

Hintergrund der Erfindung

Hier werden ein Steuerungssystem und ein Steuerungsverfahren zum Bestimmen einer Trajektorie beschrieben, der ein eigenes Kraftfahrzeug zum Ausführen eines Fahrmanövers folgen soll. Das Steuerungssystem und das Steuerungsverfahren basieren insbesondere auf einer Umfeldsensorik in dem eigenen Kraftfahrzeug und unterstützten einen Fahrer oder ein autonom fahrendes Kraftfahrzeug. Bei teilautonomen Kraftfahrzeugen und autonom gesteuerten Kraftfahrzeugen hilft es dabei, die Sicherheit und den Fahrkomfort der Insassen des Kraftfahrzeugs zu erhöhen.

Stand der Technik

Aus dem immer größer werdenden Interesse verschiedenster Funktionen selbstfahrender Kraftfahrzeuge erwächst ein gesteigertes Bedürfnis für zuverlässige und schnelle Steuerungssysteme und Algorithmen zur Bewegungsplanung (Trajektorienplanung) wenigstens teilautonom fahrender Kraftfahrzeuge. Eine große Herausforderung stellt dabei nicht nur die wachsende Anzahl an Verkehrsteilnehmern dar, sondern auch die kognitiven Aufgaben, die in hochkomplexen Verkehrsszenarien von den Verkehrsteilnehmern bewältigt werden müssen. Bei der Architektur von Steuerungssystemen teilautonom oder autonom fahrender Kraftfahrzeuge beeinflusst neben der Erkennung und Steuerung bestimmter Verkehrssituationen vor allem die Entscheidungsfindung und Bewegungsplanung in hohem Maße die Gesamtperformance des entsprechenden Kraftfahrzeugs.

In den letzten Jahren immer weiter entwickelte Steuerungssysteme und Algorithmen für die Trajektorienplanung teil(autonomer) Kraftfahrzeuge zeugen von der Komplexität des automatisierten Fahrens. Dabei besteht die Herausforderung betreffend die Bewegungsplanung in der Regel darin, eine komfortable und zudem ausführbare und kollisionsfreie Trajektorie in begrenzter Zeit zu ermitteln, um dadurch Realzeit-Performance der teil(autonomen) Systeme des Kraftfahrzeugs in einer sich dynamisch verändernden Umgebung sicher zu stellen.

In der Vergangenheit wurden verschiedene Ansätze zur Trajektorienplanung entwickelt. Dabei handelt es sich beispielsweise um Bewegungsplanungsalgorithmen oder um Techniken zur samplingbasierten Trajektorienplanung. Letztere bedient sich in der Regel bestimmter Vereinfachungen des Bewegungsplanungsproblems, um bestimmte Anforderungen an beispielsweise eine limitierte Rechenzeit zu erfüllen. Dabei besteht das (Vereinfachungs)ziel in der Abdeckung eines kontinuierlichen Raums mit einer endlichen Anzahl Samples (Abtastwerte).

In heutigen Kraftfahrzeugen bieten Fahrassistenzsysteme (ADAS - advanced driver assistance systems) eine Vielzahl von Überwachungs- und Hinweisfunktionen, um das Führen der Kraftfahrzeuge sicherer zu machen. Hierbei wird das Umfeld des Kraftfahrzeugs basierend auf aus einem oder aus mehreren an dem Kraftfahrzeug befindlichen Umfeldsensor/en gewonnenen Umfelddaten im Hinblick auf den Fahrtverlauf des eigenen Kraftfahrzeugs überwacht.

Bekannte Fahrassistenzsysteme ermitteln beispielsweise, ob sich das Kraftfahrzeug innerhalb einer Fahrspur befindet und ob der Fahrer ungewollt zu einer Seite der Fahrspur abdriftet oder im Begriff ist, diese zu verlassen. Diese Fahrassistenzsysteme generieren aus den gewonnenen Umfelddaten ein "Abbild" der Straße und insbesondere der Fahrspur. Dabei werden Objekte erkannt und während des Fahrens verfolgt, wie zum Beispiel eine Bordsteinkante, Fahrspurbegrenzungslinien, Richtungspfeile, etc.

Auch sogenannte "Toter Winkel Überwacher" gehören zu heutigen Fahrassistenzsystemen. Diese ermitteln, beispielsweise mittels Radar, Lidar, Video oder Ähnlichem, ob sich ein anderes Kraftfahrzeug, ein Verkehrsteilnehmer oder ein Objekt seitlich und/oder hinter dem Kraftfahrzeug befindet, sodass ein Spurwechsel oder ein Abbiegen des eigenen Kraftfahrzeugs zu einer Kollision mit diesem führen könnte.

Ferner wird in sogenannten ACC-Systemen (Adaptive Cruise Control) eine automatische Geschwindigkeitsregelung des eigenen Kraftfahrzeugs an die Geschwindigkeit eines vorausfahrenden Kraftfahrzeugs angepasst. Dabei soll immer ein bestimmter Abstand zu dem vorausfahrenden Kraftfahrzeug eingehalten werden. Hierzu ermitteln derartige Systeme eine Bewegungsrichtung und/oder eine Geschwindigkeit des vorausfahrenden Kraftfahrzeugs, um zu vermeiden, dass das eigene Kraftfahrzeug den Weg des vorausfahrenden Kraftfahrzeugs so kreuzt, dass es zu einer kritischen Situation kommt. Dies betrifft einerseits Spurwechsel oder Abbiegevorgänge und andererseits Auffahrunfälle.

In durch Personen geführten Kraftfahrzeugen bieten die Fahrerassistenzsysteme meist eine Hinweisfunktion, um den Fahrer vor einer kritischen Situation oder einem entsprechenden Manöver zu warnen, oder um dem Fahrer ein geeignetes Manöver für das Kraftfahrzeug vorzuschlagen. Gleichermaßen können die Fahrerassistenzsysteme auch in autonom gesteuerten Kraftfahrzeugen eingesetzt werden, um der autonomen Steuerung die entsprechenden Umfelddaten bereitzustellen.

Beispielsweise offenbart die DE 10 2016 205 442 A1 ein Verfahren zur Optimierung einer Pfadplanung eines Fahrzeugs. Weiterer technologischer Hintergrund kann der DE 10 2015 217 891 A, der DE 10 2016 211 129 A1 sowie T. SARTINI et al: "A resolution-adaptive strategy for probabilistic motion planning", World Automation Congress, 2002, Proceedings of the 5th Biannual June 9-13, 2002, 1. Januar 2002, Seiten 591-596, entnommen werden.

_Zugrundeliegendes Problem_

Im Straßenverkehr können Situationen auftreten, die von einem Fahrer oder einem (teil)autonomen Fahrerassistenzsystem eines eigenen Kraftfahrzeugs ein Ausführen eines Fahrmanövers verlangen. Beispielsweise kann bereits ein kurvenförmiger Fahrspurverlauf ein entsprechendes Fahrmanöver des eigenen Kraftfahrzeugs verlangen.

Die aktuelle Situation, in der sich das eigene Kraftfahrzeug befindet ist jedoch nicht konstant, sondern ändert sich in der Realität ständig. So können andere Verkehrsteilnehmer beispielsweise absichtlich oder unabsichtlich durch einen Unfall einen Spurwechsel oder eine Geschwindigkeitsänderung vornehmen. Zudem ändert sich die aktuelle Fahrsituation des eigenen Kraftfahrzeugs bereits aufgrund des eigenen Fahrverhaltens und/oder des sich ändernden Fahrspurverlaufs. Auf solche Änderungen der aktuellen Situation angemessen und rechtzeitig zu reagieren, stellt sowohl für herkömmliche Fahrerassistenzsysteme als auch für menschliche Fahrer eine große Herausforderung dar. Die Dynamik vieler Verkehrssituationen und der immer dichter werdende Verkehr schlägt sich zudem in einem steigenden Ressourcenverbrauch herkömmlicher Fahrerassistenzsysteme nieder.

Es besteht daher die Aufgabe, ein Steuerungssystem und ein Steuerungsverfahren für ein Kraftfahrzeug bereitzustellen, die nach Maßgabe einer aktuellen Verkehrssituation, in der sich das Kraftfahrzeug befindet, die Fahrsicherheit und den Fahrkomfort des Kraftfahrzeugs erhöhen. Dabei sollen zudem Ressourcen für das Steuerungssystem gespart werden, indem auf effiziente Weise Trajektorien für nachfolgende Fahrmanöver-Entscheidungen für das Kraftfahrzeug berechnet werden.

_Vorgeschlagene Lösung_

Diese Aufgabe wird gelöst durch ein Steuerungssystem mit den Merkmalen des Anspruchs 1 sowie ein Steuerungsverfahren mit den Merkmalen des Anspruchs 12.

Bevorzugte Ausführungsformen werden aus den Unteransprüchen 2 bis 11 und 13 sowie der nachstehenden Beschreibung ersichtlich.

Ein Aspekt betrifft ein zum Einsatz in einem eigenen Kraftfahrzeug eingerichtetes und bestimmtes Steuerungssystem. Dieses Steuerungssystem erkennt basierend auf aus mindestens einem dem eigenen Kraftfahrzeug zugeordneten Umfeldsensor gewonnenen Umfelddaten Fahrspuren, Fahrbahnbegrenzungen, Fahrbahnmarkierungen, weitere Kraftfahrzeuge und/oder andere verschiedene Objekte. Der mindestens eine Umfeldsensor ist dazu eingerichtet ist, einer elektronischen Steuerung des Steuerungssystems die den Bereich vor, seitlich neben und/oder hinter dem eigenen Kraftfahrzeug wiedergebenden Umfelddaten bereitzustellen. Das Steuerungssystem ist wenigstens dazu eingerichtet und bestimmt, Information bezüglich einer aktuellen Fahrsituation des eigenen Kraftfahrzeugs und zumindest eines anderen Kraftfahrzeugs basierend auf den bereitgestellten Umfelddaten zu ermitteln. Weiterhin ist das Steuerungssystem mindestens dazu eingerichtet und bestimmt, basierend auf der Information bezüglich der aktuellen Fahrsituation des eigenen Kraftfahrzeugs und/oder des anderen Kraftfahrzeugs eine Mehrzahl lateraler Positionen zu ermitteln und um basierend auf der Information bezüglich der aktuellen Fahrsituation des eigenen Kraftfahrzeugs und/oder des anderen Kraftfahrzeugs eine Mehrzahl longitudinaler Positionen und/oder Geschwindigkeiten zu ermitteln. Ferner ist das Steuerungssystem dazu eingerichtet und bestimmt, aus der Mehrzahl lateraler Positionen und der Mehrzahl longitudinaler Positionen und/oder Geschwindigkeiten Haltepunkte für eine Trajektorie für das eigene Kraftfahrzeug zu ermitteln, der das eigene Kraftfahrzeug beim Ausführen eines Fahrmanövers folgen soll und die Trajektorie für das eigene Kraftfahrzeug mittels einer splinebasierten Interpolation zwischen den ermittelten Haltepunkten und entsprechend den lateralen Positionen an den Haltepunkten zu bestimmen.

Beim Ermitteln der Fahrspuren, Fahrbahnbegrenzungen, Fahrbahnmarkierungen, weiteren Kraftfahrzeuge und/oder anderen verschiedenen Objekte kann das Steuerungssystem beispielsweise dazu eingerichtet und bestimmt sein, eine Fahrspur, auf der sich das eigene Kraftfahrzeug befindet und eine weitere Fahrspur zu ermitteln, auf der sich ein weiteres Kraftfahrzeug in dem Bereich vor, seitlich neben und/oder hinter dem eigenen Kraftfahrzeug befindet, und das weitere Kraftfahrzeug in dem Bereich vor, seitlich neben und/oder hinter dem eigenen Kraftfahrzeug als ein zu erfassendes anderes Kraftfahrzeug zu bestimmen. Die weitere Fahrspur kann der eigenen Fahrspur entsprechen oder benachbart zu der eigenen Fahrspur sein. Hierdurch kann sichergestellt werden, dass sowohl auf derselben Fahrspur wie das eigene Kraftfahrzeug fahrende wie auch auf einer benachbart zu der Fahrspur des eigenen Kraftfahrzeugs fahrende weitere Kraftfahrzeuge als das zu erfassende andere Kraftfahrzeug bestimmt werden können.

Zudem können insbesondere seitliche Bewegungen (der Längsachsen) des eigenen Kraftfahrzeugs und/oder des anderen Kraftfahrzeugs in Richtung einer Fahrspurbegrenzung einer Fahrspur ermittelt werden, auf der sich das eigene Kraftfahrzeug und/oder das andere Kraftfahrzeug befindet. Insbesondere kann dabei mittels des Steuerungssystems ein weiteres Kraftfahrzeug als das andere Kraftfahrzeug bestimmt werden, das sich vor und/oder hinter und/oder seitlich vor und/oder seitlich hinter dem eigenen Kraftfahrzeug befindet und in der aktuellen Fahrsituation (zum jeweils aktuellen Zeitpunkt) die geringste Distanz zu dem eigenen Kraftfahrzeug aufweist.

Die eigene Fahrspur sowie die weitere Fahrspur kann das Steuerungssystem beispielsweise anhand der bereitgestellten Umfeldmerkmale ermitteln, wie beispielsweise Fahrspurbegrenzungen und/oder Fahrspurmarkierungen. Diese Umfeldmerkmale kann das Steuerungssystem ebenfalls basierend auf aus den mittels des mindestens einen Umfeldsensors gewonnenen Umfelddaten erkennen. Ferner kann das Steuerungssystem die Umfeldmerkmale auch von einem externen System zur Verfügung gestellt bekommen, wie beispielsweise von einem GPS-System.

Das andere Kraftfahrzeug kann mittels des mindestens einen Umfeldsensors des eigenen Kraftfahrzeugs über eine vorbestimmte Zeitspanne oder kontinuierlich erfasst werden und die entsprechenden Daten können dem Steuerungssystem des eigenen Kraftfahrzeugs bereitgestellt werden. Dabei kann das Steuerungssystem dazu eingerichtet und bestimmt sein, während einer vorbestimmten Zeitspanne oder kontinuierlich eine Änderung eines Abstands zwischen einer Längsachse des anderen Kraftfahrzeugs und einer Mittellinie, wenigstens einer Fahrspurbegrenzung oder wenigstens einer Fahrspurmarkierung der zugehörigen Fahrspur zu ermitteln, auf der sich das andere Kraftfahrzeug befindet. Die Mittellinie sowie die Fahrspurbegrenzung der zugehörigen Fahrspur kann dabei eine virtuelle, von dem Steuerungssystem bestimmte aktuelle Mittellinie bzw. aktuelle Fahrspurbegrenzung der zugehörigen Fahrspur sein. Gleichermaßen kann das Steuerungssystem während der vorbestimmten Zeitspanne oder kontinuierlich eine Änderung des Abstands zwischen einer Längsachse des anderen Kraftfahrzeugs und einer virtuellen oder realen Fahrspurmarkierung oder Fahrspurbegrenzung ermitteln, auf der sich das eigene Kraftfahrzeug befindet.

Das Steuerungssystem kann dazu eingerichtet und bestimmt sein, zum Ermitteln der aktuellen Verkehrssituation eine Distanz zwischen dem eigenen Kraftfahrzeug und einem vor, seitlich neben und/oder hinter dem eigenen Kraftfahrzeug befindlichen anderen Kraftfahrzeug sowie eine Geschwindigkeitsdifferenz und/oder eine Beschleunigungsdifferenz zwischen dem eigenen Kraftfahrzeug und dem anderen Kraftfahrzeug zu ermitteln, wobei sich das eigene Kraftfahrzeug und das andere Kraftfahrzeug auf derselben Fahrspur oder auf benachbarten Fahrspuren befinden können.

Die ermittelten Distanzen, Geschwindigkeitsdifferenzen und/oder Beschleunigungsdifferenzen zwischen dem eigenen Kraftfahrzeug und dem anderen Kraftfahrzeug können von dem Steuerungssystem beliebig kombiniert und in Relation zueinander gesetzt werden.

Es versteht sich, dass das Steuerungssystem auch dazu eingerichtet und bestimmt sein kann, die am Verkehr teilnehmenden weiteren Kraftfahrzeuge mittels des mindestens einen Umfeldsensors über eine vorbestimmte Zeitspanne oder kontinuierlich zu erfassen, um die aktuelle Verkehrssituation zu ermitteln. Somit kann das Steuerungssystem auch Veränderungen der zuvor beschriebenen relativen Distanzen, Geschwindigkeitsdifferenzen und/oder Beschleunigungsdifferenzen über eine vorbestimmte Zeitspanne oder kontinuierlich ermitteln und zwar zu sämtlichen weiteren Kraftfahrzeugen oder anderen Objekten, die sich in einer aktuellen Verkehrssituation im näheren Umfeld des eigenen Kraftfahrzeugs befinden.

Bei bestimmten Ausführungsformen kann das Steuerungssystem ferner dazu eingerichtet und bestimmt sein, basierend auf den bereitgestellten Umfelddaten ein Basisfahrmanöver zu ermitteln, das das eigene Kraftfahrzeug ausführen soll, und zumindest eine der Mehrzahl lateraler Positionen basierend auf dem ermittelten Basismanöver zu bestimmen und/oder zumindest einer der lateralen Positionen einen Wert zuzuweisen, der eine Basismanöverklasse kennzeichnet, wobei die Basismanöverklasse in einem Satz von Basismanöverklassen enthalten ist, der zumindest aus Basismanövern für Spurwechsel links, Spurwechsel rechts und Spurhalten zusammengesetzt ist.

Alternativ oder zusätzlich kann der Satz von Basismanöverklassen die weiteren Basismanöver Spurhalten links und/oder Spurhalten rechts enthalten.

Das Steuerungssystem kann ferner dazu eingerichtet und bestimmt sein, die Mehrzahl longitudinaler Positionen basierend auf einer longitudinalen Beschleunigung des eigenen Kraftfahrzeugs und/oder des anderen Kraftfahrzeugs zu bestimmen.

Dabei kann es sich beispielsweise um eine auf der Motorleistung des eigenen Kraftfahrzeugs basierende maximal mögliche Beschleunigung des eigenen Kraftfahrzeugs handeln. Alternativ oder zusätzlich kann es sich dabei um aus Sicherheits- und Komfortüberlegungen abgeleitete maximale Beschleunigungswerte des eigenen und/oder des anderen Kraftfahrzeugs handeln, die auf der aktuellen Fahrsituation basieren oder in sonstiger geeigneter Weise vorgegeben sein können.

Bei bestimmten Ausführungsformen kann das Steuerungssystem ferner dazu eingerichtet und bestimmt sein, die Mehrzahl longitudinaler Positionen mittels adaptiver Diskretisierung zu bestimmen, wobei eine Beschleunigung des eigenen Kraftfahrzeugs und/oder des anderen Kraftfahrzeugs als Steuerparameter für die adaptive Diskretisierung verwendet wird.

Dabei kann es sich beispielsweise um eine der vorstehend beschriebenen longitudinalen und/oder um laterale Beschleunigungen oder jeweils um entsprechende Maximalwerte handeln.

Weiterhin kann es sich dabei insbesondere um die zum jeweiligen Ermittlungszeitpunkt der aktuellen Fahrsituation des eigenen Kraftfahrzeugs und/oder des anderen Kraftfahrzeugs bestehende Beschleunigung in Fahrtrichtung des eigenen Kraftfahrzeugs und/oder in Fahrtrichtung des anderen Kraftfahrzeugs handeln.

Mittels der adaptiven Diskretisierung kann ein nichtlineares Abbild der linear abgetasteten longitudinalen Positionen und/oder Geschwindigkeiten des eigenen Kraftfahrzeugs und/oder des anderen Kraftfahrzeugs erstellt werden.

Zudem können mithilfe der adaptiven Diskretisierung können insbesondere beim Evaluieren eines Auffahrszenarios auf eine Autobahn und/oder Schnellstraße variierende longitudinale Beschleunigungen des eigenen Kraftfahrzeugs und/oder des anderen Kraftfahrzeugs bei der Bestimmung der Trajektorie für das eigene Kraftfahrzeug berücksichtigt werden.

Das Steuerungssystem kann ferner dazu eingerichtet und bestimmt sein, die Bestimmung der Trajektorie für das eigene Kraftfahrzeug unter Berücksichtigung einer statischen Kollisionsprüfung durchzuführen, wobei die statische Kollisionsprüfung auf der Mehrzahl lateraler Positionen des eigenen Kraftfahrzeugs und/oder des anderen Kraftfahrzeugs basiert.

Das Steuerungssystem kann weiterhin dazu eingerichtet und bestimmt sein, die Bestimmung der Trajektorie für das eigene Kraftfahrzeug unter Berücksichtigung einer dynamische Kollisionsprüfung durchzuführen, wobei die dynamische Kollisionsprüfung auf der Mehrzahl lateraler Positionen und/oder auf der Mehrzahl longitudinaler Positionen und/oder Geschwindigkeiten des eigenen Kraftfahrzeugs und/oder des anderen Kraftfahrzeugs basiert.

Dabei kann Steuerungssystem ferner dazu eingerichtet und bestimmt sein, die dynamische Kollisionsprüfung unter Berücksichtigung der maximalen Beschleunigung des eigenen Kraftfahrzeugs und/oder des anderen Kraftfahrzeugs durchzuführen.

Dabei kann das Steuerungssystem ferner dazu eingerichtet und bestimmt sein, die statische Kollisionsprüfung und/oder die dynamische Kollisionsprüfung unter Verwendung des Trennungssatzes durchzuführen.

Das Steuerungssystem kann ferner dazu eingerichtet und bestimmt sein, die Trajektorie für das eigene Kraftfahrzeug mittels einer Zielfunktion zu überprüfen, die auf einer Kostenfunktion basiert.

Dabei kann der Zielfunktion ein Zielzustand zugeordnet sein, und Abweichung(en) der Zielfunktion von dem Zielzustand können als Ziele der Zielfunktion verwendet werden. Alternativ oder zusätzlich können weitere Ziele der Zielfunktion in Form der lateralen und/oder longitudinalen Beschleunigung des eigenen Kraftfahrzeugs und/oder in Form des lateralen und/oder longitudinalen Rucks des eigenen Kraftfahrzeugs als Zielzustände der Zielfunktion verwendet werden.

So kann eine umfassende holistische Zielfunktion ermittelt werden, deren einzelne Terme die dynamische Kollisionsvermeidung, die statische Kollisionsvermeidung, die Realisierbarkeit sowie den Fahrkomfort für die jeweils aktuelle Verkehrssituation des eigenen Kraftfahrzeugs 12 modellieren, um die Trajektorie für das eigene Kraftfahrzeug für jede aktuelle Fahrsituation und für jede Manöverklasse auszuwählen.

Erfindungsgemäß ist das Steuerungssystem dazu eingerichtet und bestimmt, die Mehrzahl lateraler Positionen und/oder die Mehrzahl longitudinaler Positionen und/oder Geschwindigkeiten für das eigene Kraftfahrzeug und/oder für das andere Kraftfahrzeug in krummlinigen Koordinaten bezüglich einer dem Steuerungssystem des eigenen Kraftfahrzeugs durch die Umfelddaten bereitgestellten Referenzfahrspur zu bestimmen, und die Trajektorie für das eigene in orthogonalen Koordinaten zu überprüfen.

Dabei kann auch die Interpolation in orthogonalen Koordinaten erfolgen.

Dadurch kann die Trajektorienplanung unabhängig von der Straßengeometrie vorgenommen werden für Fahrten auf geraden und kurvigen Straßenabschnitten eingesetzt werden.

Im Gegensatz zur Evaluierung der Kandidatentrajektorien in krummlinigen Koordinaten ist dadurch keine zeitintensive punkteweise Transformation von für Hindernisse (z.B. das andere Kraftfahrzeug) ermittelten Trajektorien vonnöten. Zusätzlich ermöglicht das alleinige Transformieren der Haltepunkte mitsamt Interpolation und Evaluation in orthogonale Koordinaten (Kraftfahrzeugkoordinaten), dass nicht jeder einzelne Trajektorienpunkt transformiert werden muss. Aus Gründen der Genauigkeit kann die Auflösung der Haltepunkte gemäß der Straßenkrümmung gewählt werden, wodurch eine durch die Interpolation verursachte Abweichung zu einer Referenzspur (Referenztrajektorie) minimiert wird.

Das Steuerungssystem kann ferner dazu eingerichtet und bestimmt sein, die Trajektorie mittels einer Zielfunktion zu bestimmen, die auf einer Kostenfunktion basiert.

Das Steuerungssystem kann ferner dazu eingerichtet und bestimmt sein, bei der Bestimmung der Trajektorie für das eigene Kraftfahrzeug eine statische Kollisionsprüfung durchzuführen. Diese statische Kollisionsprüfung basiert auf der Mehrzahl erster Samplingwerte.

Das Steuerungssystem kann ferner dazu eingerichtet und bestimmt sein, bei der Bestimmung der Trajektorie für das eigene Kraftfahrzeug eine dynamische Kollisionsprüfung durchzuführen. Die die dynamische Kollisionsprüfung basiert auf der Mehrzahl zweiter Samplingwerte.

Das Steuerungssystem kann ferner dazu eingerichtet und bestimmt sein, die dynamische Kollisionsprüfung unter Berücksichtigung der maximalen Beschleunigung des eigenen Kraftfahrzeugs durchzuführen.

Dabei kann Steuerungssystem ferner dazu eingerichtet und bestimmt sein, die statische Kollisionsprüfung und/oder die dynamische Kollisionsprüfung unter Verwendung des Trennungssatzes durchzuführen.

Ein weiterer Aspekt der Erfindung betrifft ein Steuerungsverfahren gemäß Anspruch 12.

Ein noch weiterer Aspekt betrifft ein Kraftfahrzeug, das ein vorstehend beschriebenes Steuerungssystem umfasst.

Gegenüber herkömmlichen Fahrerassistenzsystemen verbessert die hier vorgestellte Lösung ein korrektes Einschätzen und ein korrektes Erkennen der aktuellen Fahrsituation des eigenen Kraftfahrzeugs und weiterer Kraftfahrzeuge. Zudem wird ein in Realzeit ausgeführter zweistufiger Planungs- und Evaluierungsansatz für Trajektorienkandidaten bereitgestellt, der eine exakte und effiziente Ermittlung einer bestmöglichen (optimalen) Trajektorie für ein zukünftiges Fahrmanöver des eigenen Kraftfahrzeugs ermöglicht.

Diese bestmögliche Trajektorie kann also als angemessene Reaktion auf die aktuelle Verkehrssituation bestimmt werden, in der sich das eigene Kraftfahrzeug befindet. Die mittels des mindestens einen Umfeldsensors gewonnenen Umfelddaten ändern sich dabei gemäß der realen Verkehrs- und Fahrsituation ständig und können zyklisch aktualisiert werden.

Wird die bestmögliche Trajektorie für ein zukünftiges Fahrmanöver des eigenen Kraftfahrzeugs eingesetzt, erhöht dies den Fahrkomfort und die Fahrsicherheit des eigenen Kraftfahrzeugs, da nicht nur statische und dynamische Kollisionsprüfungen durchgeführt werden, sondern auch die Fahrdynamik des eigenen Kraftfahrzeugs beim Bestimmen der Trajektorie berücksichtigt wird. Auch kann mit dem Steuerungssystem die fahrdynamische Realisierbarkeit der bestmöglichen Trajektorie sichergestellt werden, was zusätzlich die Fahrsicherheit erhöht. Zudem kann in weiteren Ausführungsformen des Steuerungssystems das Fahrverhalten des eigenen Kraftfahrzeugs beim Folgen der Trajektorie durch Berücksichtigung der Fahrdynamik des eigenen Kraftfahrzeugs optimiert werden. Unter der Fahrdynamik sind hier beispielsweise die Längsbeschleunigung und die Querbeschleunigung des eigenen Kraftfahrzeugs zu verstehen.

Es ist für den Fachmann ersichtlich, dass die zuvor beschriebenen Aspekte und Merkmale beliebig in einem Steuerungssystem und/oder einem Steuerungsverfahren kombiniert werden können. Zwar wurden einige der voranstehend beschriebenen Merkmale in Bezug auf ein Steuerungssystem beschrieben, jedoch versteht sich, dass diese Merkmale auch auf ein Steuerungsverfahren zutreffen können. Genauso können die voranstehend in Bezug auf ein Steuerungsverfahren beschriebenen Merkmale in entsprechender Weise auf ein Steuerungssystem zutreffen.

Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen Zeichnungen. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Komponenten sind hierbei nicht maßstäblich. Gleiche oder gleichwirkende Komponenten sind mit denselben Bezugszeichen versehen.

Figur 1     zeigt schematisch ein Kraftfahrzeug gemäß bestimmten Ausführungsbeispielen, das ein Steuerungssystem und mindestens einen Umfeldsensor aufweist.

Figur 2     zeigt schematisch die Architektur für einen zweistufigen Ansatz zum Planen und Evaluieren von Kandidatentrajektorien gemäß bestimmten Ausführungsbeispielen.

Figur 3     zeigt schematische seitliche Referenzpfade (Referenztrajektorien) für fünf verschiedene seitliche Manöverklassen gemäß bestimmten Ausführungsbeispielen.

Figur 4     zeigt schematisch eine nichtlineare Abbildung von linearer zu adaptiver Diskretisierung unter Verwendung unterschiedlicher beispielhafter Beschleunigungswerte als Steuerparameter gemäß bestimmten Ausführungsbeispielen.

Figur 5     zeigt schematisch eine Abbildung der relativen Kosten der adaptiven Diskretisierung im Vergleich zur linearen Diskretisierung für eine unterschiedliche Anzahl von Longitudinalbeschleunigungen gemäß bestimmten Ausführungsbeispielen.

Figur 6     zeigt schematisch die Transformation aus krummlinigen Koordinaten $K$ in Fahrzeugkoordinaten $F$ gemäß bestimmten Ausführungsbeispielen.

Figur 7     zeigt schematisch einen Satz ermittelter Kandidatentrajektorien gemäß bestimmten Ausführungsbeispielen für einen geraden (oberes Bild) und einen kurvigen (unteres Bild) Straßenabschnitt.

Figur 8     zeigt schematisch eine durch das Steuerungssystem bestimmte bestmögliche (optimale) Trajektorie aus dem Satz ermittelter Kandidatentrajektorien gemäß bestimmten Ausführungsbeispielen für einen geraden (oberes Bild) und einen kurvigen (unteres Bild) Straßenabschnitt.

Figur 9     verdeutlicht schematisch den gemäß bestimmten Ausführungsbeispielen angewendeten Trennungssatz.

Figur 10     zeigt schematisch die mittlere Laufzeit für dynamische Kollisionsprüfung gemäß bestimmten Ausführungsbeispielen.

Figur 11     zeigt eine schematische Darstellung für dynamische Kollisionsprüfung unter Verwendung des Trennungssatzes gemäß bestimmten Ausführungsbeispielen.

Figur 12     zeigt eine schematische Darstellung des zweistufigen Trajektorienplanungs- und Evaluierungsansatzes gemäß bestimmten Ausführungsbeispielen mit der ersten Stufe der samplingbasierten Ermittlung der Kandidatentrajektorien (links) und der zweiten Stufe der Kollisionsprüfung (rechts).

Figur 13     zeigt (von oben nach unten) schematisch die ersten fünf Darstellungen eines Auffahrszenarios auf eine Autobahn gemäß bestimmten Ausführungsbeispielen unter Verwendung des zweistufigen Trajektorienplanungs- und Evaluierungsansatzes.

Figur 14     zeigt schematisch (von oben nach unten) die zweiten fünf Darstellungen des Auffahrszenarios auf eine Autobahn gemäß bestimmten Ausführungsbeispielen unter Verwendung des zweistufigen Trajektorienplanungs- und Evaluierungsansatzes.

Figur 15     zeigt schematisch die Geschwindigkeit des Kraftfahrzeugs während des in den Figuren 13 und 14 gezeigten Auffahrszenarios auf eine Autobahn.

Detaillierte Beschreibung der Zeichnungen

Im Rahmen der folgenden Offenbarung werden bestimmte Aspekte vorrangig mit Bezug auf das Steuerungssystem beschrieben. Diese Aspekte sind jedoch selbstverständlich auch im Rahmen des offenbarten Steuerungsverfahrens gültig, das beispielsweise von einer zentralen Steuervorrichtung (ECU) eines Kraftfahrzeugs ausgeführt werden kann. Dies kann unter Vornahme geeigneter Schreib- und Lesezugriffe auf einen dem Kraftfahrzeug zugeordneten Speicher erfolgen. Das Steuerungsverfahren kann innerhalb des Kraftfahrzeugs sowohl in Hardware als auch Software als auch einer Kombination aus Hardware und Software implementiert sein. Dazu zählen auch digitale Signalprozessoren, anwendungsspezifische integrierte Schaltkreise, Field Programmable Gate Arrays sowie weitere geeignete Schalt- und Rechenkomponenten.

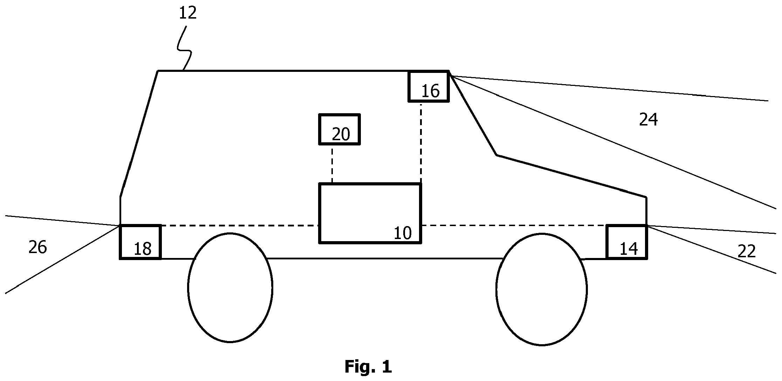

Figur 1 zeigt schematisch ein Kraftfahrzeug 12 (eigenes Kraftfahrzeug), das ein Steuerungssystem 10 umfasst. Das Steuerungssystem 10 ist mit mindestens einem an dem Kraftfahrzeug 12 befindlichen Umfeldsensor 14, 16, 18 gekoppelt, um von dem mindestens einen Sensor 14, 16, 18 Umfelddaten zu erhalten. Das Steuerungssystem 10 kann eine elektronische Steuerung ECU (Electronic Control Unit; in der Figur nicht dargestellt) umfassen. Beispielsweise kann das vorliegende Steuerungssystem 10 mithilfe der ECU und/oder weiterer elektronischer Steuerungssysteme zumindest dazu eingerichtet und bestimmt sein, eine Trajektorie für das Kraftfahrzeug 12 zu ermitteln und/oder eine Trajektorie für ein anderes Kraftfahrzeug zu ermitteln, das sich in einer aktuellen Fahrsituation des eigenen Kraftfahrzeugs 12 in dessen Umfeld befindet. Beispielsweise empfängt die ECU Signale von den Umfeldsensoren 14, 16, 18, verarbeitet diese Signale und die zugehörigen Umfelddaten und erzeugt Steuerungs- und/oder Ausgabesignale.

In der Figur 1 sind drei Umfeldsensoren 14, 16, 18 dargestellt, die entsprechende Signale an das Steuerungssystem 10 oder die elektronische Steuerung ECU senden. Insbesondere ist an dem Kraftfahrzeug 12 mindestens ein in Fahrtrichtung des Kraftfahrzeugs 12 nach vorne gerichteter Umfeldsensor 14 angeordnet, der einen Bereich 22 vor dem Kraftfahrzeug 12 erfasst. Dieser mindestens eine Umfeldsensor 14 kann beispielsweise im Bereich einer vorderen Stoßstange, einer vorderen Lampe und/oder eines vorderen Kühlergrills des Kraftfahrzeugs 12 angeordnet sein. Dadurch erfasst der Umfeldsensor 14 einen Bereich 22 direkt vor dem Kraftfahrzeug 12.

Mindestens ein zusätzlicher oder alternativer, ebenfalls in Fahrtrichtung des Kraftfahrzeugs 12 nach vorne gerichteter Umfeldsensor 16 ist im Bereich einer Frontscheibe des Kraftfahrzeugs 12 dargestellt. Beispielsweise kann dieser Umfeldsensor 16 zwischen einem Inneren Rückspiegel des Kraftfahrzeugs 12 und dessen Frontscheibe angeordnet sein. Ein solcher Umfeldsensor 16 erfasst einen Bereich 24 vor dem Kraftfahrzeug 12, wobei je nach Gestalt des Kraftfahrzeugs 12 ein Bereich 24 direkt vor dem Kraftfahrzeug 12 aufgrund des vorderen Abschnitts (bzw. dessen Geometrie) des Kraftfahrzeugs 12 nicht erfasst werden kann.

Ferner kann mindestens ein Umfeldsensor 18 seitlich am und/oder am Heck des Kraftfahrzeugs 12 angeordnet sein. Dieser optionale Umfeldsensor 18 erfasst einen Bereich 26, der seitlich und/oder in Fahrtrichtung des Kraftfahrzeugs 12 hinter dem Kraftfahrzeug 12 liegt. Beispielsweise können die Daten oder Signale dieses mindestens einen Umfeldsensors 18 zur Verifizierung von durch die anderen Umfeldsensoren 14, 16 erfassten Informationen und/oder zur Bestimmung einer Krümmung einer durch das Kraftfahrzeug 12 befahrenen Fahrspur verwendet werden.

Der mindestens eine Umfeldsensor 14, 16, 18 kann beliebig implementiert sein und eine Frontkamera, eine Heckkamera, eine Seitenkamera, einen Radar-Sensor, einen Lidar-Sensor, einen Ultraschall-Sensor und/oder einen Inertialsensor umfassen. Beispielsweise kann der Umfeldsensor 14 in Form einer Frontkamera, eines Radar-, Lidar-, oder Ultraschall-Sensors verwirklicht sein. Für den höher gelegenen Umfeldsensor 16 eignet sich insbesondere eine Frontkamera, während der im Heck des Kraftfahrzeugs 12 angeordnete Umfeldsensor 18 in Form einer Heckkamera, eines Radar-, Lidar-, oder Ultraschall-Sensors implementiert sein kann.

Die elektronische Steuerung ECU verarbeitet die aus dem/den an dem Kraftfahrzeug 12 befindlichen Umfeldsensor/en 14, 16, 18, gewonnenen Umfelddaten, um Informationen bezüglich die statische Umgebung (unbewegliche Umfeldobjekte wie beispielsweise Fahrbahnbegrenzungen) sowie die dynamische Umgebung (bewegliche Umfeldobjekte wie beispielsweise andere Kraftfahrzeuge oder Verkehrsteilnehmer) des Kraftfahrzeugs 12 zu erhalten.

So werden von der elektronischen Steuerung die aus dem/den an dem Kraftfahrzeug 12 befindlichen Umfeldsensor/en 14, 16, 18, gewonnenen Umfelddaten verarbeitet, um eine durch das Kraftfahrzeug 12 befahrene Fahrspur mit einer ersten und einer zweiten seitlichen Fahrspurbegrenzung vor dem Kraftfahrzeug 12 zu erfassen. Zusätzlich verarbeitet die elektronische Steuerung ECU die aus dem/den an dem Kraftfahrzeug 12 befindlichen Umfeldsensor/en 14, 16, 18 gewonnen Umfelddaten, um eine durch ein anderes Objekt belegte Fahrspur (die benachbart zu der vom eigenen Fahrzeug befahrenen Fahrspur liegt, wobei benachbart bedeutet, dass auch eine oder mehrere weitere Fahrspuren zwischen den benachbarten Fahrspuren liegen können) sowie deren seitliche Fahrspurbegrenzungen vor, seitlich neben und/oder hinter dem Kraftfahrzeug 12 zu erfassen. Bei dem anderen Objekt handelt es sich hier um ein anderes Kraftfahrzeug, dass sich entlang der der Fahrspur des eigenen Kraftfahrzeugs benachbarten Fahrspur bewegt, oder um jedes andere mögliche Hindernis auf der Fahrspur vor diesem anderen Kraftfahrzeug.

Dazu stellen die Umfeldsensoren 14, 16, 18 der elektronischen Steuerung ECU die den Bereich vor, seitlich neben und/oder hinter dem Fahrzeug wiedergebenden Umfelddaten bereit. Hierfür ist das Steuerungssystem 10 über mindestens einen Datenkanal oder Bus (in Fig. 1 gestrichelt dargestellt) mit dem mindestens einen Umfeldsensor 14, 16, 18 verbunden. Der Datenkanal oder Bus kann mittels Kabel oder kabellos realisiert sein.

Alternativ oder zusätzlich kann das Steuerungssystem 10 oder dessen elektronische Steuerung ECU auch Daten von einem oder mehreren anderen Assistenzsystemen 20 oder einer anderen Steuerung 20 des Kraftfahrzeugs 12 erhalten, die die befahrenen Fahrspuren des eigenen Kraftfahrzeugs 12, des anderen Kraftfahrzeugs und weiterer Kraftfahrzeuge mit deren seitlichen Fahrspurbegrenzungen angeben, oder sich daraus ableiten lassen. Somit können bereits durch andere Systeme ermittelte Daten und Informationen durch das Steuerungssystem 10 verwendet werden.

Ferner ermittelt das Steuersystem 10 oder dessen elektronische Steuerung ECU eine Fahrsituation mit den Umfeldsensoren, d.h. auf Basis der mithilfe des mindestens einen Umfeldsensors 14, 16, 18 gewonnenen Umfelddaten. Auch hier kann alternativ oder zusätzlich ein bereits vorhandenes Assistenzsystem 20 oder eine elektronische Steuerung 20 Daten und/oder Informationen liefern, die eine Fahrsituation definieren, oder aus denen sich eine Fahrsituation schnell ableiten lässt. Abhängig von der ermittelten Fahrsituation wird anschließend zumindest eine mögliche Trajektorie bestimmt, der das eigene Kraftfahrzeug 12 im weiteren Fahrtverlauf folgen soll.

Das Fahrerassistenzsystem 20 oder die elektronische Steuerung 20 können weiter dazu eingerichtet und bestimmt sein, das Kraftfahrzeug teil(autonom) zu steuern. Das Steuerungssystem 10 ist in diesem Fall dazu eingerichtet und bestimmt, Daten an das Fahrerassistenzsystem 20 oder die elektronische Steuerung 20 zum autonomen Fahren auszugeben. Insbesondere kann das Steuerungssystem 10 (oder dessen ECU) Daten, die einen Verlauf der bestimmten Trajektorie angeben, der das eigene Kraftfahrzeug 12 im weiteren Verlauf (nach der aktuellen Verkehrssituation) folgen soll, an die Komponente 20 ausgeben. Die Daten können ebenfalls über einen Datenkanal oder Bus kabelgebunden oder kabellos übertragen werden.

Die aus den Umfelddaten gewonnenen und dem Steuerungssystem 10 bereitgestellten Informationen umfassen beispielsweise Positionen und/oder Geschwindigkeiten und/oder Beschleunigungen des eigenen Kraftfahrzeugs 12 und/oder des anderen Kraftfahrzeugs in jeweils lateraler, longitudinaler oder einer Kombination lateraler und longitudinaler Richtungen. Weiterhin umfassen diese Informationen beispielsweise relative Geschwindigkeiten und/oder relative Beschleunigungen zwischen dem eigenen Kraftfahrzeug 12 und dem anderen Kraftfahrzeug in den jeweils angesprochenen Richtungen.

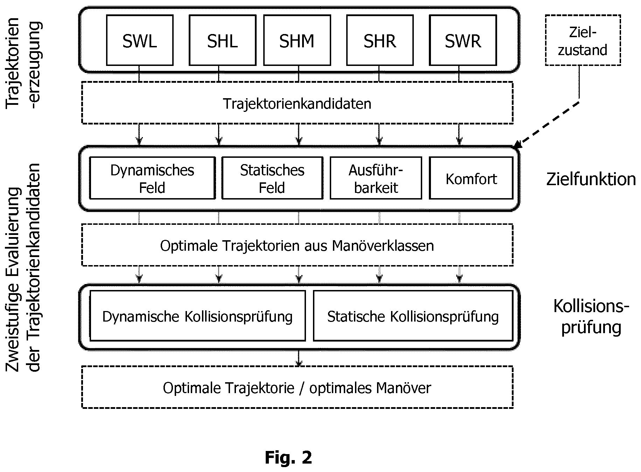

Einen Überblick über den hier vorgestellten, auf Realzeit-Sampling der dem Steuerungssystem 10 bereitgestellten Umfelddaten basierenden Ansatz, um eine oder mehrere Trajektorien für das eigene Kraftfahrzeug 12 zu planen und die bestmögliche (optimale) Trajektorie der geplanten Trajektorien führ den weiteren Fahrtverlauf des eigenen Kraftfahrzeugs zu bestimmen, der insbesondere dem hier vorgestellten Steuerungssystem 10 und dem Steuerungsverfahren zugrunde liegt, verschafft Figur 2. Daraus wird ersichtlich, dass zunächst durch das Steuerungssystem 10 Trajektorienkandidaten erzeugt werden. Diese Trajektorienkandidaten basieren auf den seitlichen (lateralen) Manöverklassen Spurwechsel links (SWL), Spurhalten links (SHL), Spurhalten Mitte (SHM), Spurhalten rechts (SHR) und Spurwechsel rechts (SWR). Die vorliegende Offenbarung ist allerdings nicht darauf beschränkt; es können alternativ mehr oder weniger oder andere Manöverklassen definiert sein.

Dann werden durch das Steuerungssystem/Steuerungsverfahren aus den Trajektorienkandidaten unter Verwendung einer Zielfunktion die bestmöglichen Trajektorienkandidaten auf Basis der Manöverklassen ausgewählt. In die Zielfunktion fließen Zielzustände ein, die das dynamische und das statische Umfeld des eigenen Kraftfahrzeugs 12 in der aktuellen Fahrsituation sowie den Fahrkomfort und die Ausführbarkeit (Realisierbarkeit) der bestmöglichen Trajektorienkandidaten betreffen. Eine Trajektorie gilt im Rahmen dieser Offenbarung beispielsweise dann nicht als realisierbar, wenn die Fahreigenschaften des eigenen Kraftfahrzeugs 12 eine dafür notwendige Beschleunigung nicht aufbringen kann.

Danach werden statische und dynamische Kollisionsprüfungen durchgeführt, um die optimale Trajektorie für das eigene Kraftfahrzeug 12 unter den bestmöglichen Trajektorienkandidaten zu bestimmen. Das eigene Kraftfahrzeug 12 folgt sodann dieser optimalen Trajektorie im weiteren Verlauf der aktuellen Verkehrssituation.

Die vorgeschlagene Samplingstrategie ermöglicht weiterhin eine unabhängige longitudinale (in Fahrtrichtung verlaufende) Betriebsstrategie. Gewünschte Betriebseigenschaften auf höherer Ebene werden durch Zielzustände dargestellt. Nichtsdestotrotz wird die Entscheidung bezüglich der optimalen Trajektorie auf der Ebene der Trajektorienplanung mittels einer Zwei-Ebenen-Kandidatenauswahlstrategie getroffen. Die erste Ebene stellt dabei die oben beschriebene Zielfunktion dar, die die bestmöglichen Trajektorien aus den Manöverklassen liefert. Die zweite Ebene ist durch die statischen und dynamischen Kollisionsprüfungen gekennzeichnet.

Bevor jedoch die Samplingstrategie im Detail beschrieben wird, werden nachstehend die bei der Trajektorienplanung zur Anwendung kommenden mathematischen Grundlagen beschrieben.

Das im Rahmen dieser Offenbarung vorgestellte Steuerungssystem und das Steuerungsverfahren sind dazu geeignet, Beispielzustände (oder Sample-Zustände) für Haltepunkte (auch Stützstellen oder Knoten) $x_l$ in Bezug auf entsprechende zeitliche Zustände $t_l$ zu erzeugen. Mit anderen Worten wird jedem zeitlichen Zustand $t_l$ zumindest ein Haltepunkt zugeordnet. In die Ermittlung der Haltepunkte fließen also zumindest laterale und longitudinale Positionswerte des eigenen Kraftfahrzeugs und/oder des anderen Kraftfahrzeugs mit ein. Im Rahmen der folgenden Offenbarung und der Figuren folgen ein Erdkoordinatensystem, ein Kraftfahrzeugkoordinatensystem und ein krummliniges Koordinatensystem den Notationen $E$, $F$ bzw. $K$. Das Erdkoordinatensystem und das Fahrzeugkoordinatensystem folgen einem orthogonalen (beispielsweise kartesischen) Rahmen. Die entsprechenden Buchstaben kennzeichnen in hochgestellter Form vor den jeweiligen Wertangaben das entsprechende Koordinatensystem.

Um zwischen abgetasteten (gesampelten) Zuständen interpolieren zu können, wird ein Spline bestimmt, der eine Bewegung des eigenen Kraftfahrzeugs 12 in $^Fx(t)$ und $^Fy(t)$ beschreibt. wobei die Interpolierende $x(t)$ wie folgt definiert ist.

$$x(t) = \begin{cases} s_l(t) & t_l \leq t \leq t_{l+1} \\ 0 & anderenfalls. \end{cases}$$

Für $\eta$ - 1 Splinesegmente und unter der Voraussetzung, dass $t \in \{ t_l, t_{l+1} \}$ gilt, ist der Spline $\mathbf{s}$ wie folgt definiert.

$$\mathbf{s}_l(t) = \mathbf{c}_{v,l}(t - t_l)^v + \mathbf{c}_{v,l}(t - t_l)^{v-1} + ... + \mathbf{c}_{1,l}(t - t_l) + \mathbf{c}_{0,l}.$$

Die Eigenschaften des Spline erfordern, dass dieser durch die Haltepunkte $\mathbf{s}_l(t_l) = \mathbf{x}_l$ verläuft. Ein weiteres Erfordernis besteht darin, dass der Spline zwischen den jeweiligen Spline-Intervallen stetig ist, also $\mathbf{s}_l(t_{l+1}) = \mathbf{s}_{l+1}(t_{l+1})$ genügt.

Mit entsprechenden Start- und Endbedingungen für $\mathbf{x}_l = [^Fx_l, {}^Fy_l]^T$ und den entsprechenden Ableitungen können die Spline-Koeffizienten $\mathbf{c}_{0...v,l}$ bestimmt werden. Die $l = 1 ... \eta$ Stützstellen jeder auf diese Weise bestimmten Trajektorie (in der folgenden Formel unterstrichen) ergibt sich zu:

$$B = \underline{\mathbf{x}}_1, \underline{\dot{\mathbf{x}}}_1, ..., \underline{\mathbf{x}}_1^{(\mathbf{N})}, \underline{t}_1, ..., \underline{\mathbf{x}}_\eta, ..., \underline{\mathbf{x}}_\eta^{(\mathbf{N})}, \underline{T}_p$$

Für die obige Beziehung gilt zudem N = (v - 1)/2. Um die optimale Zeit für den Übergang von einem Intervall des Spline zum nächsten Intervall des Spline zu bestimmen, werden Zeitinstanzen $t_l$ beim Sampeln (Abtasten) verwendet. Die stetige splinebasierte Formulierung ermöglicht zudem die Auswahl einer Auflösung bezüglich der Zeit $\Delta T$ unabhängig von den Stützstellen $l$ und unabhängig von einem festgelegten Prognoseumfang $T_P$. Aus diesem Grund werden durch die Interpolation $n = T_P/\Delta T + 1$ die Trajektorienpunkte $\mathbf{x}_k = [^Fx_k, {}^Fy_k]^T$ gewonnen. Diese Trajektorienpunkte werden dann in der Trajektorie (die eine Kandidatentrajektorie darstellt) wie folgt zusammengefasst.

$$\mathbf{x}_{ego} = [\mathbf{x}_1, t_1, \mathbf{x}_2, t_2, ..., \mathbf{x}_k, t_k, ..., \mathbf{x}_n, T_P]^T.$$

Dabei werden konstante Zeitintervalle $t \in [t_k, t_k + 1]$ für $k = 1 ... n$ verwendet.

Der hier vorgestellte zweistufige Ansatz für die Trajektorienplanung und -Evaluierung ist herkömmlichen Ansätzen unter anderem deshalb überlegen, da die soeben beschriebene splinebasierte Formulierung und Erzeugung der Trajektorie mit krummliniger Koordinatentransformation kombiniert wird. Dabei werden laterale und longitudinale Positionen der ermittelten Haltepunkte in krummlinigen Koordinaten abgetastet und später in Fahrzeugkoordinaten transformiert. Als Referenz für die Transformation in Fahrzeugkoordinaten dienen dabei beispielsweise Fahrspurbegrenzungen und/oder Fahrspurmarkierungen einer aktuell befahrenen Fahrspur. Die transformierten Haltepunkte werden mit der oben beschriebenen splinebasierten Interpolation verbunden. Dadurch ergibt sich ein Satz Kandidatentrajektorien, der dann in Fahrzeugkoordinaten evaluiert wird.

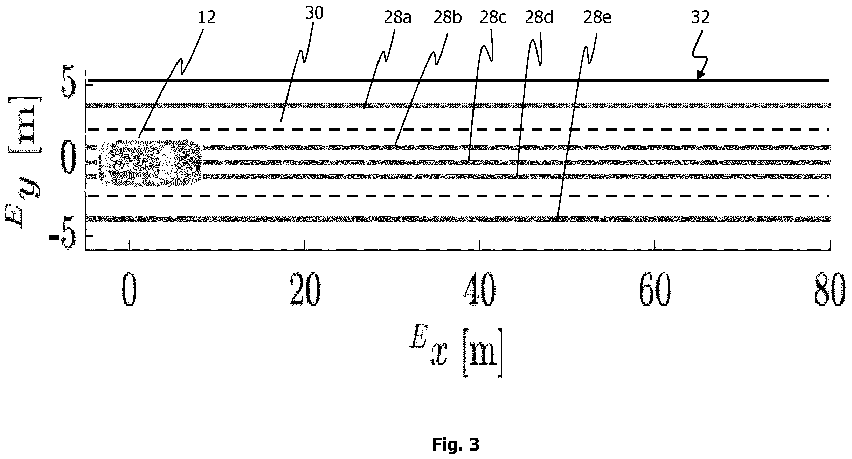

In Figur 3 ist eine beispielhafte Fahrsituation des eigenen Kraftfahrzeugs 12 dargestellt. Das eigene Kraftfahrzeug 12 bewegt sich dabei auf der mittleren Fahrspur 30 einer dreispurigen Straße/Fahrbahn (beispielsweise Autobahn) 32. Es sind keine Hindernisse wie etwa andere Kraftfahrzeuge auf der Fahrbahn 32 vorhanden. Zusätzlich sind in der Figur 3 seitliche (laterale) Referenzpfade (Referenztrajektorien) 28a bis 28e dargestellt, die die eingangs beschriebenen Manöver Spurwechsel links (Referenztrajektorie 28a), Spurhalten links (Referenztrajektorie 28b), Spurhalten Mitte (Referenztrajektorie 28c), Spurhalten rechts (Referenztrajektorie 28d) und Spurwechsel rechts (Referenztrajektorie 28d) kennzeichnen.

Die Art der Abtastung der lateralen Position des eigenen Kraftfahrzeugs 12 basiert in erster Linie auf der Struktur der aktuellen Umgebung des eigenen Kraftfahrzeugs 12. Die abgetasteten Werte werden aus den Umfelddaten ermittelt. Der verwendete Satz lateraler (seitlicher) Manöverklassen basiert auf der Planung von Betriebseigenschaften des eigenen Kraftfahrzeugs 12 auf höherer Ebene (beispielsweise durch die elektronische Steuerung 20 oder jede andere geeignete elektronische Steuerung des eigenen Kraftfahrzeugs 12). Die angesprochenen Manöverklassen Spurwechsel links (SWL), Spurhalten links (SHL), Spurhalten Mitte (SHM), Spurhalten rechts (SHR) und Spurwechsel rechts (SWR) stellen gewählte Manöverklassen dar, die vorliegende Offenbarung ist jedoch nicht darauf beschränkt. Beispielsweise kann das Steuerungssystem 10 (wie auch das Steuerungsverfahren) alternativ auch mit drei (z.B. Spurwechsel links, Spurhalten und Spurwechsel rechts) gewählten Manöverklassen arbeiten.

Durch die höhere Anzahl einbezogener Manöverklassen ergibt sich allerdings eine höhere Variabilität (im Gegensatz zu Systemen, die die Manöver beispielsweise nur nach SWL, SWR und Spurhalten klassifizieren) der Manöver des Kraftfahrzeugs 12, insbesondere bezüglich dessen aktuell befahrener Fahrspur 30. So können (beispielsweise mithilfe von SHM und SHR) auch komplexe zusammengesetzte Manöver klassifiziert werden. Ein derartiges Manöver stellt etwa das Annähern des eigenen Kraftfahrzeugs 12 an eine andere (seitlich links oder rechts von der aktuell befahrenen Fahrspur liegende) Fahrspur dar, um dort beispielsweise eine Lücke zu schließen. Die Verwendung krummliniger Koordinaten $K$ vereinfacht dabei die Abtastung der seitlichen Position spürbar, da jede der fünf Manöverklassen direkt mit einem festgelegten Wert für $^K y_t$ assoziiert ist. Mit anderen Worten liefert die seitliche Abtastung des (statischen) Fahrzeugumfeldes zu jedem Abtastungszeitpunkt einen zumindest auf der ermittelten Manöverklasse basierenden oder dieser Manöverklasse zugewiesenen Wert.

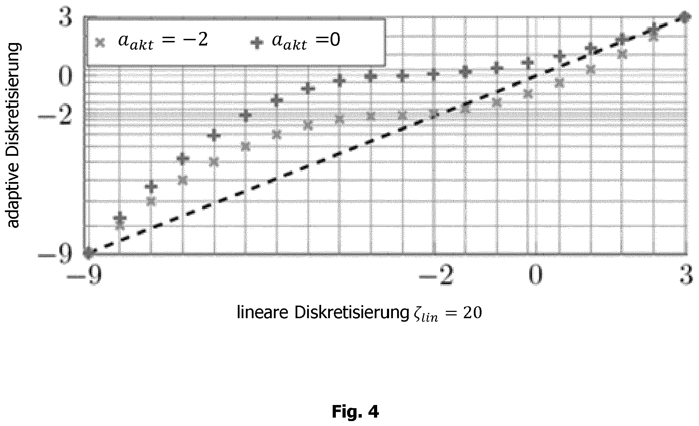

Als nächstes wird die Abtastung in Fahrtrichtung (longitudinale Abtastung) mit Bezug auf Figur 4 beschrieben. Dort ist ein nichtlineares Abbild einer linearen Diskretisierung auf eine adaptive Diskretisierung gezeigt. Die adaptive Diskretisierung wird bei der longitudinalen Abtastung, also der Ermittlung longitudinaler Positionen (oder Positionswerten) und/oder Geschwindigkeiten (oder Geschwindigkeitswerten) des eigenen Kraftfahrzeugs 12 und oder des anderen Kraftfahrzeugs verwendet.

Aufgrund der limitierten Rechenressourcen in teil(autonomen) Kraftfahrzeugen ist es notwendig, einen endlichen und trotzdem aussagekräftigen Satz von möglichen Trajektorien (Trajektorienkandidaten) zu erzeugen. Aus diesem Grund wird im Rahmen der vorliegenden Offenbarung neben der zustandsbasierten Samplingstrategie für das laterale Abtasten eine aktionsbasierte Samplingstrategie verwendet, um Longitudinalparameter wie beispielsweise die Position $^K x_t$ und/oder die Geschwindigkeit $^K v_t$ abzutasten. Die Longitudinalbeschleunigung (in Fahrtrichtung des Kraftfahrzeugs) $^K a_x(t)$ des eigenen Kraftfahrzeugs und/oder des anderen Kraftfahrzeugs wird als Steuerparameter verwendet. Ein Modell zweiter Ordnung wird verwendet, um Longitudinalsamples für die Position $^K x_t$ und die Geschwindigkeit $^K v_t$ in Bezug auf das krummlinige Koordinatensystem $K$ (in der folgenden Beziehung wiederum vor dem jeweiligen Wert hochgestellt) nach Maßgabe der folgenden Beziehung zu erzeugen.

$$\begin{bmatrix} ^K \dot{x}(t) \\ ^K \dot{v}(t) \end{bmatrix} = \begin{bmatrix} 0 & 1 \\ 0 & 0 \end{bmatrix} \begin{bmatrix} ^K x(t) \\ ^K v(t) \end{bmatrix} + \begin{bmatrix} 0 \\ 1 \end{bmatrix} {}^K a_x(t)$$

Anschließend wird ein endlicher Satz Steuereingaben $^K a_x \in \mathcal{U}$ für die adaptive Diskretisierung ermittelt. Unter der Annahme, dass die bestmögliche Steuereingabe für einen aktuell durchzuführenden Planungsschritt (Planungszyklus) der Trajektorienplanung zeitlich nahe demjenigen des letzten Planungsschrittes ist, ist im Bereich der tatsächlichen Longitudinalbeschleunigung eine höhere Auflösung erforderlich. Nichtsdestotrotz müssen minimale und maximale Beschleunigungswerte berücksichtigt werden.

Bei der daraus abgeleiteten adaptiven (situationsangepassten) Diskretisierungsstrategie werden, wie in Figur 4 dargestellt, deshalb zwei Parabeln $f_1$ und $f_2$ verwendet, um die linear abgetasteten Werte $z$ (die aus den Umfelddaten ermittelt werden) online (das heißt in Realzeit oder im Wesentlichen in Realzeit) und in Abhängigkeit des eigentlichen Beschleunigungswerts $z_{akt}$ des eigenen Kraftfahrzeugs 12 und/oder des anderen Kraftfahrzeugs zu transformieren. Die dafür notwendigen Koeffizienten werden aus den folgenden Bedingungen bestimmt:

$$f_1(z_{min}) = z_{min} \qquad f_1(\overline{z}) = z_{akt} \qquad f_1'(\overline{z}) = 0$$

$$f_2(z_{max}) = z_{max} \qquad f_2(\overline{z}) = z_{akt} \qquad f_2'(\overline{z}) = 0,$$

wobei $\overline{z}$ als $\overline{z} = (z_{max} - z_{min})/2$ definiert ist. Der adaptive (angepasste) abgetastete Wert $f(z)$ wird dann wie folgt bestimmt.

$$f(z) = \begin{cases} f_1(z) & z < (z_{max} - \overline{z}) \\ f_2(z) & z \geq (z_{max} - \overline{z}) \end{cases}.$$

Das Ergebnis der adaptiven Diskretisierung für aktuelle (für die jeweils gültige Abtastungssituation) Beschleunigungswerte des eigenen Kraftfahrzeugs 12 und/oder des anderen Kraftfahrzeugs $a_{akt} = -2$ und $a_{akt} = 0$ ist in Figur 4 dargestellt. Die eng nebeneinander liegenden horizontal verlaufenden Gitterlinien der Figur zeigen die gewünschte höhere Auflösung im Bereich des aktuellen Werts für die adaptive Diskretisierung bezüglich $a_{akt} = -2$.

Der Vorteil, der sich aus der adaptiven Diskretisierung ergibt, zeigt sich beim Evaluieren eines Auffahrszenarios auf eine Autobahn und/oder Schnellstraße. Dieses Szenario enthält variierende longitudinale Beschleunigungen, die notwendig sind, um den dynamischen alltäglichen Verkehr erfolgreich zu bewältigen. Zum Vergleich ist in Figur 4 eine linear diskretisierte Referenztrajektorie mit quasi-kontinuierlichen Werten dargestellt, über der die adaptive Diskretisierung 4 aufgetragen ist. So wird die bestmögliche Lösung bezüglich der Zielfunktion angenähert.

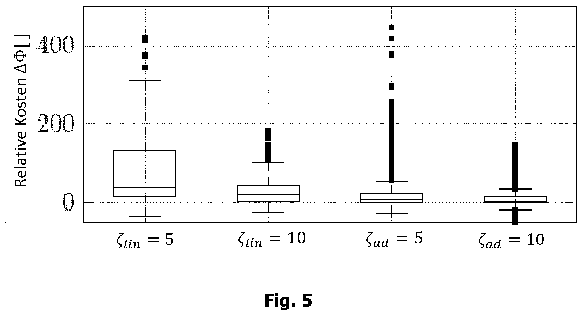

Es werden die relativen Kosten $\Delta\Phi$ aus der Differenz der open-loop Resultate zwischen einer Referenzlösung $\Phi_{opt}$ und der suboptimalen (nächstbestmöglichen) Lösung $\Phi$ des Ansatzes mit der entsprechenden Longitudinal-Samplingstrategie berechnet. Dabei wurden vier Varianten getestet, die jeweils zum Vergleich linearer und adaptiver Diskretisierung bezüglich der Anzahl gesampelter Longitudinalbeschleunigungen $\zeta = 5$ und $\zeta = 10$ dienen. Die Ergebnisse sind in Figur 5 dargestellt. Daraus wird der Vorteil des adaptiven Samplings aufgrund der geringeren relativen Kosten zum linearen Sampling ersichtlich.

Vergleicht man die adaptiven Samplingstrategien untereinander (die rechten beiden Teile der Figur 5 bei $\zeta_{ad}$ = 5 und $\zeta_{ad} = 10$), kann das Auftreten einer verminderten Anzahl von Ausreißern bei $\zeta_{ad} = 10$ dadurch erklärt werden, dass für die Diskretisierung der letzte (im letzten vor dem aktuellen Planungsschritt) ermittelte bestmögliche Beschleunigungswert im aktuellen Planungsschritt verwendet wird.

Es ist zu bemerken, dass auch die Referenzlösung für die Kostenfunktion $\Phi_{opt}$ lediglich eine Annäherung der bestmöglichen (optimalen) Lösung darstellt, um relative Kosten kleiner Null zu ermöglichen. Die Veränderungen im dynamischen Umfeld sind langsamer (benötigen also relativ länger Zeit) als die Berechnungszeit für einen Planungszyklus, sodass sich das Steuerungssystem bzw. das Steuerungsverfahren problemlos anpasst und die suboptimale Beschleunigung in Abhängigkeit der aktuellen Verkehrssituation auffindet.

Der zweistufige Planungs- und Evaluierungsansatz als Teil des Steuerungssystems 10 ist für gleichzeitiges Planen longitudinaler und lateral Bewegungen ausgelegt, da die zu planende Trajektorie für das eigene Kraftfahrzeug 12 einem beliebigen Kurvenverlauf folgen soll und gleichzeitig die Verkehrssituation direkt vor, seitlich neben und hinter dem eigenen Kraftfahrzeug 12 zu berücksichtigen ist. Deshalb werden laterale und longitudinale Samplingzustände transformiert und kombiniert, um die Trajektorienkandidaten zu erzeugen.

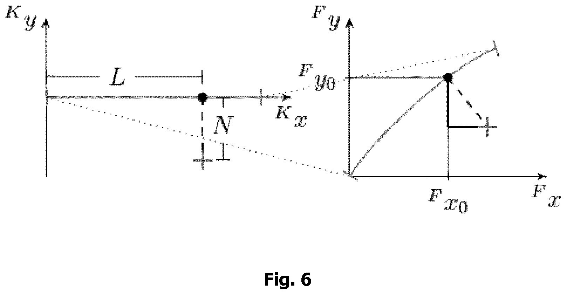

Nachfolgend die dabei zum Einsatz kommende Transformationsstrategie mit Bezug auf Figur 6 beschrieben. Um die krummlinigen Koordinaten in Fahrzeugkoordinaten zu transformieren, wird vom Steuerungssystem 10 oder dessen elektronischer Steuerung eine durch die Umfeldsensoren erkannte Referenzfahrspurmarkierung (siehe beispielsweise die Fahrbahnmarkierung 32 in Figur 3) ausgewählt. Die Referenzfahrspurmarkierung 32 ist als kubisches Polynom $f_{ref}$ definiert. Um die Bogenlänge zu berechnen, wird das endliche Integral angenähert und die Trapezregel angewendet. Auf diese Weise wird eine Look-Up-Tabelle für gleich beabstandete Abfragen (englisch: queries) innerhalb des Bereichs der erkannten Fahrspurmarkierung $^{F}x_i \in [x_s, x_e]$ erzeugt. Daraus ergibt sich eine Abbildung von $^{K}x$ auf die

Anfangslösung der Transformation $^Fx_0$. Der Initialwert (Anfangswert) für den lateralen Teil ist durch $^Fy_0 = (^F{}^Fx_0)$ gegeben.

Mit der orthogonalen Steigung $m\perp = -1/f'_{ref}(^Fx)$ ergibt sich die transformierte Position in x-Richtung und y-Richtung der Fahrzeugkoordinaten zu:

$$^Fx = {}^Fx_0 + {}^Ky * 1/\sqrt{1 + m_\perp^2}$$

$$^Fy = {}^Fy_0 + {}^Ky * m_\perp/\sqrt{1 + m_\perp^2}$$

Figur 6 illustriert demnach, wie eine Transformation aus dem krummlinigen Koordinatensystem $K$ in Fahrzeugkoordinaten $F$ erfolgt. Die Evaluierung der Look-up-Tabelle für $^Kx = L$ liefert die Position $^Fx_0$ (Position in x-Richtung in krummlinigen Koordinaten). Die Bogenlänge wird dann mittels numerischer Integration des Referenzpolynoms berechnet. So wird die Position $^Fy_0$ (Position in y-Richtung in krummlinigen Koordinaten) ermittelt. Unter Berücksichtigung des Normalabstandes $^Ky = N$, ergeben sich die gewünschten Koordinaten im Fahrzeugkoordinatensystem $F$ aus trigonometrischen Überlegungen.

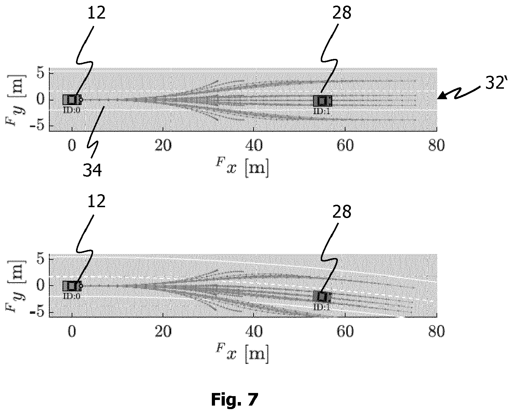

Nachdem die Positionen in Fahrzeugkoordinaten transformiert worden sind, werden Haltepunkte (auch Stützstellen oder Knoten) durch sogenannten Unterabtasten (englisch: subsampling) bestimmt und es wird ein Satz Trajektorienkandidaten mittels der zuvor beschriebenen Spline-Interpolation berechnet. Ein derartiger resultierender Satz Trajektorienkandidaten $\mathcal{C}$ (Referenzzeichen 36) ist im Rahmen eines beispielhaften Verkehrsszenarios (auch Fahrsituation oder Verkehrssituation) in Figur 7 dargestellt. Dabei ist jeweils das eigene Kraftfahrzeug 12 zu sehen, wie es auf der rechten Fahrspur 34 einer zweispurigen Fahrbahn 32' einem anderen Kraftfahrzeug 28 folgt. Die obere Abbildung der Figur 7 zeigt ein Szenario mit dem anderen Kraftfahrzeug 28 als (statisches oder dynamisches) Hindernis für einen geraden Straßenabschnitt. In der unteren Abbildung der Figur 7 ist ein entsprechendes Szenario für einen kurvigen Straßenabschnitt beschrieben.

Mit anderen Worten zeigt die Figur 7 eine Mehrzahl (auch Satz) kombinierter, das heißt aus lateralen und longitudinalen Samples (Positionen und/oder Geschwindigkeiten) zusammengesetzter bzw. ermittelter Kandidatentrajektorien 36 für das eigene Kraftfahrzeug 12. Die einzelnen Trajektorien, aus denen der Satz Kandidatentrajektorien 36 besteht, sind jeweils als graue Linien dargestellt und sind durch die auf den Linien in Punktform angedeuteten Haltepunkte verbunden.

Ein wichtiger Aspekt bei der samplingbasierten Trajektorienplanung ist die exakte und schnelle Ermittlung der Kandidatentrajektorien 36. Deswegen wird im Rahmen dieser Offenbarung die eingangs erwähnte zweistufige Planungs- und Evaluierungsansatz verwendet. So werden die Aspekte des für den Menschen komfortablen Fahrens und der exakten Kollisionsvermeidung kombiniert. Dies vor dem Hintergrund, dass die Kandidatentrajektorien 36 (und vor allem die am Ende aus den Kandidatentrajektorien ermittelte optimale Trajektorie für die aktuelle Verkehrssituation des eigenen Kraftfahrzeugs 12) zum einen menschliches Fahrverhalten widerspiegeln soll, zum anderen aber auch sicheres und präzises Manövrieren sichergestellt werden muss. Deswegen werden die Kandidatentrajektorien 36 jeder Manöverklasse durch eine umfassende Zielfunktion evaluiert (überprüft), die physikalisch inspirierte Sicherheitsabstände für dynamische Kollisionsvermeidung modelliert, und zudem der statischen Kollisionsvermeidung, den Machbarkeits- (Ausführbarkeits-) und Komfortzielen für die jeweils aktuelle Verkehrssituation des eigenen Kraftfahrzeugs 12 Rechnung trägt. So wird die optimale (bestmögliche) Trajektorie für jede aktuelle Fahrsituation und für jede Manöverklasse gewählt.

Aus Sicherheitsgründen wird ein Nachversuch für jede ausgewählte optimale Trajektorie mit einer exakten geometrischen Abbildung der beteiligten Fahrzeuge durchgeführt. Falls der Nachversuch fehlschlägt, kann zu einer hier nicht näher beschriebenen Ersatzstrategie gewechselt werden.

Um aus den Trajektorienkandidaten 36 die (dort global) optimale Trajektorie zu bestimmen, werden die bestmöglichen Trajektorien der einzelnen Manöverklassen miteinander verglichen. Dieser Vergleich wird mittels der beschriebenen Kostenfunktion $\Phi$ vorgenommen, weswegen die optimale Trajektorie gleichzeitig die für die aktuelle Fahrsituation des eigenen Kraftfahrzeugs 12 beste Manöverklasse repräsentiert. Die folgende Formel repräsentiert den Vergleich zum Bestimmen der optimalen Trajektorie $\mathbf{x}^*_{ego}$.

$$\mathbf{x}^*_{ego} = \arg^{min}_{\mathbf{x}_{ego} \in \mathcal{C}}(\omega_d b_d + \omega_s b_s + \Phi).$$

Dabei kennzeichnet $\Phi$ die Kosten der Zielfunktion. Die Ausdrücke $b_d$ und $b_s$ sind wie folgt definiert:

$$b_d = \left\{ \begin{array}{ll} 1 & \text{bei dynamischer Kollision} \\ 0 & \text{anderenfalls.} \end{array} \right.$$

$$b_s = \left\{ \begin{array}{ll} 1 & \text{bei statischer Kollision} \\ 0 & \text{anderenfalls.} \end{array} \right.$$

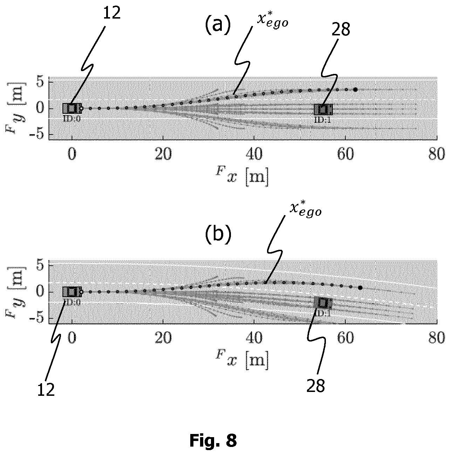

Zudem stellen die Ausdrücke $\omega_d$ und $\omega_s$ Gewichtungsparameter für exakte Kollisionskontrolle dar. Die Figur 8 zeigt Ergebnisse der Berechnung der global optimalen Trajektorie $\mathbf{x}_{ego}^*$ unter den Trajektorienkandidaten 36 für die schon bezüglich Figur 7 vorgestellten Straßenabschnitte bzw. Fahrsituationen. Dabei ist die optimale Trajektorie $\mathbf{x}_{ego}^*$ mit im Vergleich zu den anderen Trajektorien der Trajektorienkandidaten 36 stärkeren und dunkleren Punkten verdeutlicht.

Als nächstes wird die Berechnung der Zielfunktion beschrieben, die zur Evaluierung (Bestimmung) der bestmöglichen Trajektorie $\mathbf{x}_{ego}^*$ für das eigene Kraftfahrzeug 12 als umfassende Zielfunktion definiert ist. Deswegen berücksichtigen einzelne Terme der Zielfunktion die dynamische Kollisionsvermeidung mittels eines dynamischen (Um)feldes, die statische Kollisionsvermeidung mittels eines statischen Um(feldes), die Machbarkeit/Ausführbarkeit der bestmöglichen Trajektorie und den Fahrkomfort des eigenen Kraftfahrzeugs 12 beim Verfolgen der optimalen Trajektorie $\mathbf{x}_{ego}^*$. Sowohl im oberen Bild der Figur 8, wo die optimale Trajektorie $\mathbf{x}_{ego}^*$ für einen geraden Straßenabschnitt evaluiert wird, als auch im unteren Bild der Figur 8, wo die bestmögliche Trajektorie $\mathbf{x}_{ego}^*$ für einen kurvigen Straßenabschnitt evaluiert wird, führt die Evaluierung zu einem Spurwechselmanöver nach links, sodass das eigene Kraftfahrzeug 12, wenn es dieser ermittelten optimalen Trajektorie $\mathbf{x}_{ego}^*$ im weiteren Verlauf der aktuellen Verkehrssituation folgt, das andere Kraftfahrzeug 28 überholen kann, beispielsweise weil dieses langsamer als das eigene Kraftfahrzeug 12 fährt und/oder einen Abbremsvorgang ausführen muss, der das eigene Kraftfahrzeug 12 zu einem Ausweichmanöver zwingt.

Die in die Zielfunktion einfließende Kostenfunktion ist wie folgt definiert:

$$\Phi = \mathbf{e}^T \Omega \mathbf{e}.$$

Dabei stellt $\Omega$ eine Gewichtungsmatrix $\Omega \in \mathbb{R}^{d_{err} \times d_{err}}$ dar. Der Ausdruck $\mathbf{e}$ kennzeichnet einen Fehlervektor, der wie folgt bestimmt wird:

$$\mathbf{e} = [\mathbf{o}_1, \mathbf{o}_2, \ldots, \mathbf{o}_z, \chi(\mathbf{h}_1), \chi(\mathbf{h}_2), \ldots, \chi(\mathbf{h}_{n-1})]^T$$

Die Ausdrücke $\mathbf{o}_i$ stellen dabei jeweils die Ziele der Zielfunktion dar. Ungleichheitsbedingungen werden durch $\chi(\mathbf{h}_k) = \max\{[0, h_k]\}$ berücksichtigt. Auf diese Weise werden der aktuellen Fahrsituation des eigenen Kraftfahrzeugs 12 jeweils durch das statische und das dynamische Umfeld aufgezwungenen Bedingungen mit einbezogen. Zusätzlich werden Bedingungen bezüglich der Fahrzeugdynamik des eigenen Kraftfahrzeugs 12 wie beispielsweise dessen maximale Beschleunigung (kann beispielsweise durch den Kammschen Kreis definiert sein) und nicht holonome Fahrzeugeigenschaften erfasst. Auch die Abweichung vom gewünschten Zielzustand wird als Ziel der Zielfunktion formuliert. Dieser Zielzustand ist durch ein Planungsmodul höherer Ebene definiert und wird hier nicht näher beschrieben. Um den auf den Fahrkomfort bezogenen Zielen ($\mathbf{o}_i$) gerecht zu werden, werden die seitliche (laterale) und die in Fahrtrichtung auftretende (longitudinale) Beschleunigung sowie der Ruck (die Ableitung der Beschleunigung nach der Zeit) in lateraler und longitudinaler Richtung des eigenen Kraftfahrzeugs 12 beim Folgen der optimalen Trajektorie $\mathbf{x}_{ego}^*$ minimiert.

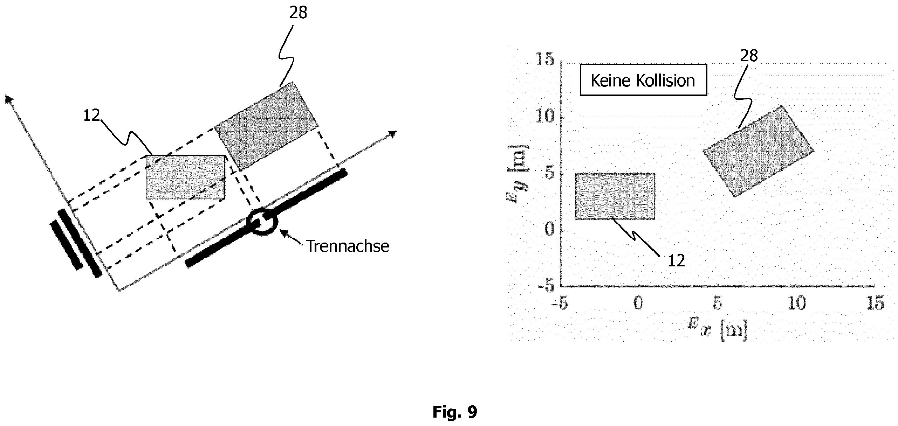

Als nächstes werden der hier verwendeten Grundlagen der Kollisionsprüfung mit Bezug auf die Figur 9 beschrieben. Um Kollisionsvermeidung für die Kandidatentrajektorien 36 für das eigene Kraftfahrzeug 12 sicherzustellen, ist im vorliegenden Fall ein exaktes geometrisches Modell des eigenen Kraftfahrzeugs 12 und des anderen Kraftfahrzeugs 28 (also im generellen Fall jeweils Modelle der potentiell kollidierenden Kraftfahrzeuge) wichtig. Im Rahmen dieser Offenbarung werden Zeichen-Boxen (englisch:bounding boxes) verwendet, um die Form des eigenen Kraftfahrzeugs 12 und des anderen Kraftfahrzeugs 28 und/oder weiterer, an der aktuellen Verkehrssituation beteiligter Kraftfahrzeuge darzustellen. Dies wird beispielsweise aus Figur 9 ersichtlich. Die rechteckigen Boxen sind insbesondere dazu geeignet, konvexe Formen, wie sie in Kraftfahrzeugkarosserien vielfach Verwendung finden, mit hoher Genauigkeit abzubilden.

Im Rahmen der dynamischen Kollisionsprüfung führt eine hohe Genauigkeit des Modells auch zu einem höheren Rechenaufwand für das die Kollisionsprüfung ausführende Steuerungssystem (im vorliegenden Fall das Steuerungssystem 10). Um dies zu verhindern, kann beispielsweise ein hierarchisches Beschneiden (englisch: hierarchical pruning) möglicher Kollisionen erfolgen, was allerdings im Gegenzug zu einer Verringerung der Anzahl exakter Kollisionsprüfungen führt. Im Gegensatz dazu verlangen Mehrfachinterferenztests die Prüfung jeder einzelnen Kandidatentrajektorie Punkt für Punkt gegenüber sämtlichen Hindernistrajektorien, also Trajektorien, die das eigene Kraftfahrzeug 12 für beispielsweise das andere Kraftfahrzeug 28 aufgrund dessen aktuellen Fahrverhaltens und der aktuellen Fahrsituation des eigenen Kraftfahrzeugs 12 und/oder des anderen Kraftfahrzeugs 28 ermittelt. Diese punkteweise Prüfung entspricht bezüglich der Rechenressourcen des ausführenden Steuerungssystems dem schlimmsten Fall, dessen Berechnung aus sicherheitstechnischen Überlegungen allerdings immer in ausführbarer Zeit berücksichtigt werden muss. Um das dynamische Umfeld angemessen zu evaluieren, wird die Kollisionsprüfung in Raum und Zeit durchgeführt. Dabei wird der Trennungssatz (Satz von Eidelheit) verwendet, um zeitliche Überschneidungen zwischen zwei Rechtecken darzustellen.

Die Figur 9 verdeutlicht den Trennungssatz. Es ist zu erkennen, dass das eigene Kraftfahrzeug 12 nicht mit dem anderen Kraftfahrzeug 28 (beide sind jeweils als Rechtecke dargestellt) kollidiert, wenn eine Linie existiert, auf die beide Rechtecke (also Objekte) projiziert werden können und sich die Objekte auf dieser Linie nicht überlappen. Dies ist im in Figur 9 gezeigten Beispiel der Fall. Im Rahmen der dynamischen Kollisionsprüfung werden sämtliche Trajektorienkandidaten 36 des eigenen Kraftfahrzeugs 12 mit durch das eigene Kraftfahrzeug 12 ermittelten Trajektoriendaten für das andere Kraftfahrzeug 28 für jeden aktuellen Zeitpunkt $t_k$ auf Überschneidungen geprüft.

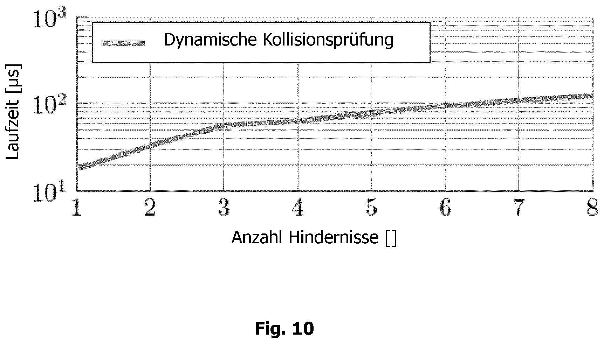

Die Laufzeit der dynamischen Kollisionsprüfung ist in Figur 10 dargestellt. Im vorliegenden Ausführungsbeispiel wird eine mittlere Laufzeit für die exakte dynamische Kollisionsprüfung unter Verwendung von Zeichen-Boxen angenommen, die für 10000 Testläufe mit Trajektorien bestehend aus 31 Trajektorienpunkten ermittelt wurde. Es ist deutlich zu erkennen, dass die mittlere Laufzeit von der Anzahl der im Umfeld des eigenen Kraftfahrzeugs 12 befindlichen Hindernisse (z.B. andere Kraftfahrzeuge) abhängig ist. Selbst für eine höhere Anzahl an Hindernissen (beispielsweise sieben) ergibt sich eine mittlere Laufzeit von etwa 100 $\mu$s.

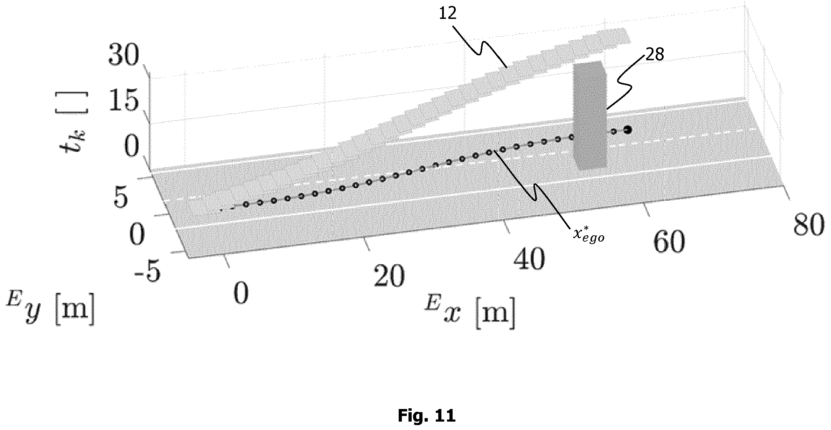

Figur 11 zeigt ein Beispiel für exakte dynamische Kollisionsprüfung in der Raum-Zeit Domäne unter Verwendung des Trennungssatzes. Das eigene Kraftfahrzeug 12 und das andere Kraftfahrzeug 28 sind als Rechtecke modelliert. Dabei steht jedes einzelne dargestellte Rechteck 12 (die Rechtecke in der Figur 11, deren Position in x-Richtung sich mit der Zeit verändert) für jeweils eine Position des eigenen Kraftfahrzeugs 12 in der Raum-Zeit-Domäne. Die gestapelten Rechtecke 28 stellen jeweils eine Position des anderen Kraftfahrzeugs 28 in der Raum-Zeit-Domäne dar. Die optimale Trajektorie $x_{ego}^*$ wird gegen eine oder mehrere für das andere Kraftfahrzeug 28 ermittelte (das Steuerungssystem 10 des eigenen Kraftfahrzeugs 12 ist dazu eingerichtet und bestimmt) Trajektorien für jeden Zeitpunkt $t_k$ auf Überschneidungen geprüft. Eine erkannte Überschneidung zeigt dabei eine mögliche Kollision an.

Es wird zudem eine statische Kollisionsprüfung durchgeführt, um beispielsweise eine bevorstehende Kollision des eigenen Kraftfahrzeugs 12 mit einer Straßenbegrenzung zu erkennen. Dies wird durch die Berechnung der geringsten Entfernung zwischen der Zeichen-Box des eigenen Kraftfahrzeugs 12 und der der entsprechenden Fahrspurmarkierung realisiert.

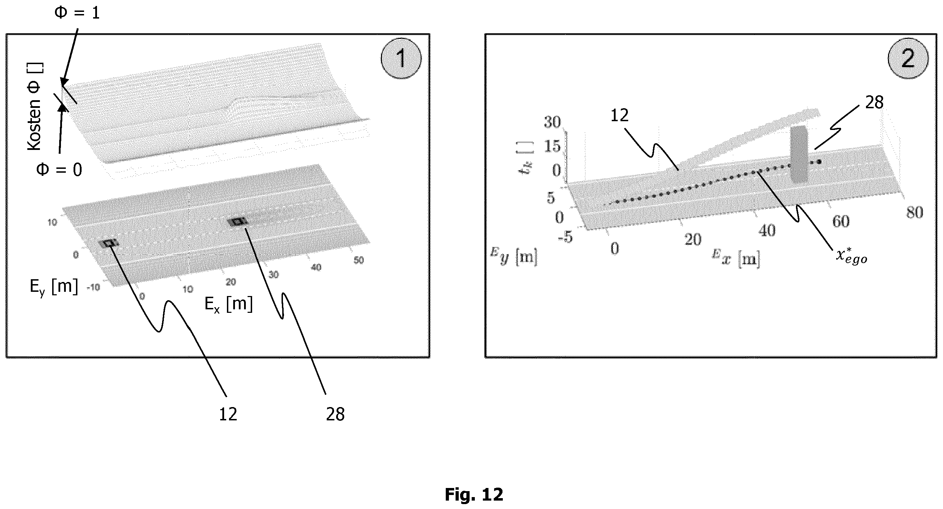

Der zweistufige oder Zwei-Ebenen-Trajektorienplanungs- und Evaluierungsansatz bzw. dessen zwei Planungsstufen sind in Figur 12 zur Verdeutlichung noch einmal dargestellt. Dabei zeigt das linke, mit einer Eins im Kreis markierte Bild die erste Planungsphase. Dort werden die Trajektorienkandidaten 36 aus der Zielfunktion bestimmt (vgl. auch die Figur 2 und die zugehörige Beschreibung). Der zweite Planungsschritt betrifft die eben beschriebene Kollisionsprüfung (statisch und dynamisch) und ist auf der rechten Seite der Figur 12 dargestellt.

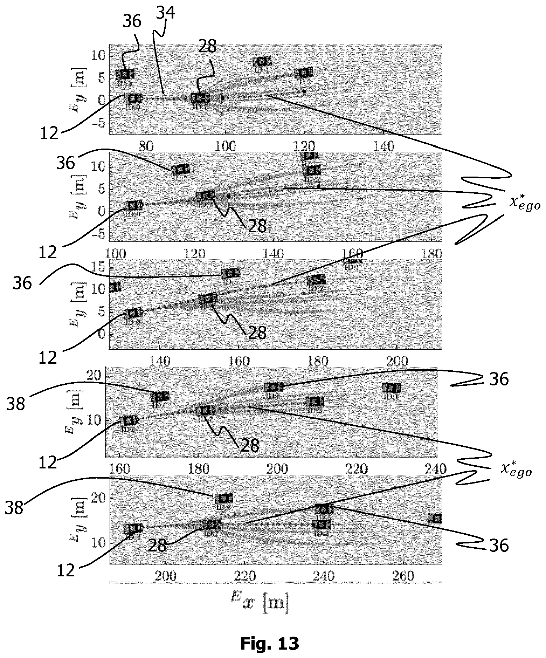

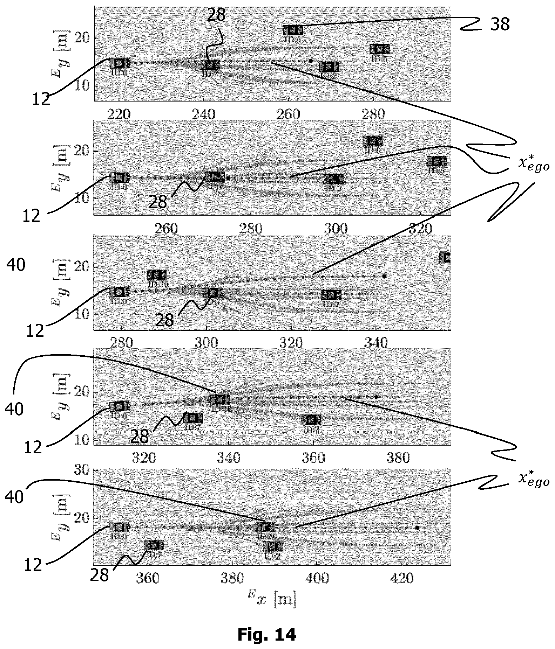

Mit Bezug auf die Figuren 13 und 14 werden nun anhand eines realistischen Verkehrsszenarios die Funktionen des Steuerungssystems 10 bzw. des zweistufigen Trajektorienplanungs- und Evaluierungsansatzes verdeutlicht. Die Figuren 13 und 14 bestehen jeweils aus fünf Bildern, die in der Reihenfolge von oben nach unten zu betrachten sind. Bei dem Verkehrsszenario handelt es sich um das Auffahren auf eine Autobahn, wobei sich im Bereich des Auffahrabschnittes mehrere weitere Kraftfahrzeuge (alle Kraftfahrzeuge, die in den Figuren 13 und 14 nicht mit der Nummer 12 referenziert sind), wie beispielsweise das andere Kraftfahrzeug 28. Zwischen jedem der fünf Bilder in den Figuren 10 und 11 liegen 2 Sekunden.

Das in den Figuren 13 und 14 dargestellte eigene Kraftfahrzeug 12 ist für das konkret beschriebene Beispiel mit Radarsensoren an dessen Front, Heck und Seiten ausgestattet und weist zusätzlich eine Kamera auf, die den Bereich vor dem eigenen Kraftfahrzeug 12 überwacht. So werden auf die beschriebene Weise statische und dynamische Umfeldinformationen aus den dem Steuerungssystem 10 bereitgestellten Umfelddaten gewonnen. Die Referenzfahrspur für die Transformation von krummlinigen Koordinaten $K$ in orthogonale Fahrzeugkoordinaten $F$ wird in der aktuellen Fahrsituation durch das Steuerungssystem 10 des eigenen Kraftfahrzeugs 12 auf Basis der Kameradaten ausgewählt.

Dabei wird in der aktuellen Fahrsituation bzw. Samplingsituation (Abtastsituation) diejenige Fahrspurmarkierung als Referenzfahrspurmarkierung ausgewählt, von der die Kamera des eigenen Kraftfahrzeugs 12 verglichen mit anderen vorhandenen Fahrspurmarkierungen den größten Bereich erfassen kann. Durch weiteres Einbeziehen von Kartendaten, die dem Steuerungssystem 10 beispielsweise durch ein in dem eigenen Kraftfahrzeug 12 vorhandenes Navigationssystem oder auf jede andere geeignete Weise kabellos oder kabelgebunden zur Verfügung gestellt werden, wird die Genauigkeit und somit die Qualität der Ergebnisse erhöht.

Das Steuerungssystem 10 arbeitet beispielsweise mit einer modellprädiktiven Regelung (englisch: receding horizon control), da die für die Trajektorienplanung und Kollisionsvermeidung verwendeten Umfelddaten zyklisch aktualisiert werden.

Für das hier als nicht einschränkend für die Funktionalität des Steuerungssystems 10 zu betrachtende Beispiel wird eine mittlere Laufzeit für einen Einzelkernprozessor mit einer Taktrate von 3,30 GHz und 6 MB Cache von 40 ms für einen Satz von einhundert Trajektorien verwendet. Für die splinebasierte Interpolation zum Erzeugen der Kandidatentrajektorien 36 wird eine Ordnung von $v = 5$ festgelegt, für den Prognoseumfang $T_P$ werden drei Sekunden gewählt.

Trajektorien für das Basismanöver Spurhalten Mitte (SM) werden als Spline mit $\eta = 3$ Stützstellen mit einer dazwischen liegenden Zeit $t_{l=2} = 1,5\ s$ modelliert. Für die Trajektorien der anderen Manöverklassen beträgt die Anzahl der Stützstellen $\eta = 2$.

Im Rahmen des in den Figuren 13 und 14 dargestellten Auffahrmanövers auf die Autobahn wird zunächst vom Steuerungssystem 10 das in der Figur mit ID:7 gekennzeichnete Fahrzeug als das andere Kraftfahrzeug 28 ausgewählt. Diese Auswahl basiert auf der Relevanz sämtlicher anderer Kraftfahrzeuge für die aktuelle Fahrsituation des eigenen Kraftfahrzeugs 12, die durch das Steuerungssystem 10 ermittelt wird. Das eigene Kraftfahrzeug 12 fährt dem anderen Kraftfahrzeug 28 in der gezeigten Situation (erstes Bild von oben in Figur 13) auf derselben Fahrspur 34 hinterher und weist aktuell eine höhere Fahrgeschwindigkeit als das andere Kraftfahrzeug 28 auf. Bei der Fahrspur 34 handelt es sich um eine kurvige Auffahrtspur auf die Autobahn. Danach wechseln das eigene Kraftfahrzeug 12 und das andere Kraftfahrzeug 28 von der Fahrspur 34 auf die rechte Fahrspur der Autobahn.

Zu diesem Zeitpunkt möchte der Fahrer oder das Fahrerassistenzsystem 20 des eigenen Kraftfahrzeugs 12 die Longitudinalgeschwindigkeit des eigenen Kraftfahrzeugs 12 auf 90 km/h erhöhen. Ein durch das eigene Kraftfahrzeug 12 ausgeführter Überholvorgang ist zu Beginn des Fahrszenarios nicht möglich, auch wenn das andere Kraftfahrzeug 28 aktuell langsamer, beispielsweise 70 km/h, fährt. Trajektorien, die einen Fahrspurwechsel nach links nach sich ziehen, würden mit hoher Wahrscheinlichkeit zu Kollisionen mit dem seinerseits überholenden anderen Kraftfahrzeug 36 führen. Im späteren Verlauf (mit Beginn des vierten Bildes von oben der Figur 13) wird ein Überholmanöver des eigenen Kraftfahrzeugs 12 von dem weiteren Kraftfahrzeug 38 verhindert. Deswegen wird das Steuerungssystem 10 eine Trajektorie für das Fahrspurhalten (SHM) auswählen und das eigene Kraftfahrzeug 12 wird, beispielsweise durch das Fahrerassistenzsystem 20 veranlasst, abgebremst, um einen konstanten Abstand zum vorausfahrenden anderen Kraftfahrzeug 28 einzuhalten (siehe die Bilder 2 bis 5 von oben der Figur 13).

Im obersten Bild der Figur 14 ist zu erkennen, dass das Steuerungssystem 10 für die aktuelle Situation einen Überhohlvorgang in Betracht zieht. Das Steuerungssystem 10 wählt also als optimale Trajektorie $x^*_{ego}$ eine Trajektorie für Spurhalten links (SHL, vgl. auch den Referenzpfad 28b in Figur 3) aus den Trajektorienkandidaten 36 aus. Das eigene Kraftfahrzeug 12 führt also ein Fahrmanöver aus, bei dem es sich der links von dessen aktueller Fahrspur befindlichen Fahrspur annähert, um den Überhohlvorgang einzuleiten.

Im zweiten Bild von oben der Figur 14 ist dann zu sehen, dass wieder eine Trajektorie für Spurhalten Mitte aus den Trajektorienkandidaten 36 durch das Steuerungssystem 12 ausgewählt wird. Das Überhohlmanöver wurde also (beispielsweise durch das Steuerungssystem 10 und/oder durch das Fahrerassistenzsystem 20) abgebrochen und das eigene Kraftfahrzeug 12 befindet sich wieder im Wesentlichen in der Mitte dessen aktuell befahrener Fahrspur.

Der Grund dafür ist im mittleren Bild der Figur 14 erkennbar. Ein im Vergleich zum eigenen Kraftfahrzeug 12 mit höherer Geschwindigkeit fahrendes Kraftfahrzeug 40 nähert sich dem eigenen Kraftfahrzeug 12 von hinten auf der Überhohlspur. Dabei besteht wiederum das Risiko einer Kollision, weswegen ein Überholmanöver des eigenen Kraftfahrzeugs 12 nicht möglich ist.

Im vierten Bild von oben in Figur 14 ist zu sehen, dass das schneller fahrende Kraftfahrzeug 40 mittlerweile einen relativ großen Abstand in longitudinaler Richtung ($E_x$ in den Figuren 13 und 14) zum eigenen Kraftfahrzeug 12 hergestellt hat, sodass ein Überholmanöver des eigenen Kraftfahrzeugs 12 nun möglich ist. Auch auf der Überholspur nähert sich zu diesem Zeitpunkt von hinten kein schneller fahrendes weiteres Kraftfahrzeug.

Da das eigene Kraftfahrzeug 12 auf eine beispielhafte Geschwindigkeit von 90 km/h beschleunigt werden soll, das andere Kraftfahrzeug 28 jedoch langsamer fährt, stellt das andere Kraftfahrzeug 28, sobald ein Überholmanöver möglich ist, nicht mehr den relevantesten Verkehrsteilnehmer für die Trajektorienplanung dar. Das Steuerungssystem 10 wählt deswegen das weitere Kraftfahrzeug 40 als Referenz(-Verkehrsteilnehmer) für die Trajektorienplanung aus und berechnet wie vorstehend beschrieben eine optimale Trajektorie $x^*_{ego}$ aus der Manöverklasse Spurwechsel links (siehe die dritten und vierten Bilder von oben in Figur 14). Das eigene Kraftfahrzeug 12 folgt dann dem weiteren Kraftfahrzeug 40 auf der Überholspur anhand einer optimalen Trajektorie $x^{*}_{ego}$ aus der Manöverklasse Spurhalten Mitte und überholt das langsamer fahrende andere Kraftfahrzeug 28.

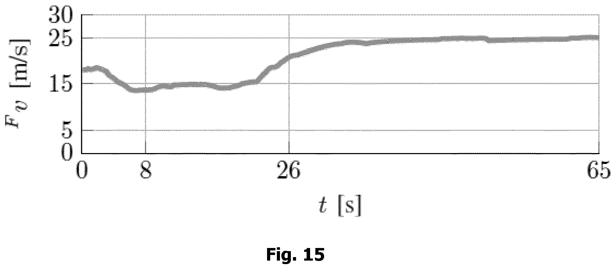

Die Geschwindigkeiten, die das eigene Kraftfahrzeug 12 in den einzelnen Situationen (Bildern) der Figuren 13 und 14 aufweist, sind in Figur 15 dargestellt. Das in den Figuren 13 und 14 gezeigte Überhohlmanöver beginnt bei einer Zeit $t$ = 8 $s$ der Figur 15 und endet bei einer Zeit $t$ = 26 $s$ der Figur 15. Wie erwähnt liegen zwischen den einzelnen Bildern in den Figuren 13 und 14 jeweils zwei Sekunden. Wie aus Figur 15 ersichtlich, kann das eigene Kraftfahrzeug erst kurz vor Erreichen von $t$ = 26 $s$ beschleunigen, um die gewünschten (beispielsweise durch das Fahrerassistenzsystem 10 vorgegebenen) 90 km/h zu erreichen. Dies kennzeichnet den in den letzten beiden Bildern (von oben) der Figur 14 dargestellten Überholvorgang, den das eigene Kraftfahrzeug 12 ausführt.

Die vorliegende Offenbarung beschäftigt sich mit einem Steuerungssystem (10) zur samplingbasierten Planung von Kandidatentrajektorien. Dabei werden geeignete Trajektorienkandidaten 36 in Realzeit generiert und evaluiert. Seitliches Abtasten basiert auf seitlichen Basismanöverklassen. Dadurch wird die fahrspurdiskrete Struktur für teilautonomes Fahren genutzt. Im Gegensatz zu diesem seitlichen Abtasten der seitlichen Werte im Zustandsraum, werden longitudinale Samples (also Abtastwerte in Fahrtrichtung) aus dem (dynamischen) Handlungsraum erzeugt, wobei die Longitudinalbeschleunigung des eigenen Kraftfahrzeugs 12 als Steuerparameter verwendet wird. Durch die adaptive Diskretisierung wird die Effizienz beim Abtasten gesteigert.

Die splinebasierte Formulierung der Trajektorien und deren Anwendung in krummlinigen Koordinaten bietet den Vorteil, dass das Steuerungssystem 10 (im Wesentlichen) in Realzeit arbeiten kann und sowohl für gekrümmte als auch gerade Straßenabschnitte einsetzbar ist.

Der zweistufige Ansatz zur Planung und Evaluierung der Trajektorienkandidaten 36 dient der Kollisionsvermeidung mit Trajektorien anderer Verkehrsteilnehmer, die sich in einer aktuellen Fahrsituation im näheren Umfeld des eigenen Kraftfahrzeugs 12 befinden. Auch diese Trajektorien werden jeweils durch das Steuerungssystem 10 ermittelt. Zusätzlich fließt in die Evaluierung der geforderte Fahrkomfort und die Ausführbarkeit einer möglichen optimalen Trajektorie ein.

Die lateralen wie auch die longitudinalen Fahreigenschaften des eigenen Kraftfahrzeugs 12 sind nicht durch eine höhere Steuerungsebene vorherbestimmt, da diese lediglich einen Zielzustand bereitstellt. Die vorgestellte Sampling- und Evaluationsstrategie ermöglicht demnach neben der Trajektorienplanung für laterale Manöver wie Spurwechsel inhärent auch das Durchführen von anderen Fahrmanövern wie dem Folgen eines vorderen Fahrzeugs oder dem Einfließen in eine Fahrspur bei kleiner werdender Anzahl der Fahrspuren.

Es versteht sich, dass die zuvor erläuterten beispielhaften Ausführungsformen nicht abschließend sind und den hier offenbarten Gegenstand nicht beschränken. Insbesondere ist für den Fachmann ersichtlich, dass er die Merkmale der verschiedenen Ausführungsformen miteinander kombinieren kann und/oder verschiedene Merkmale der Ausführungsformen weglassen kann, ohne dabei von dem hier offenbarten Gegenstand abzuweichen.


**Patentansprüche**

1.  Steuerungssystem (10), das zum Einsatz in einem eigenen Kraftfahrzeug (12) eingerichtet und bestimmt ist, basierend auf aus mindestens einem dem eigenen Kraftfahrzeug zugeordneten Umfeldsensor/en (14, 16, 18) gewonnenen Umfelddaten Fahrspuren, Fahrbahnbegrenzungen, Fahrbahnmarkierungen, weitere Kraftfahrzeuge und/oder Objekte in einem Bereich (22, 24, 26) vor, seitlich neben und/oder hinter dem eigenen Kraftfahrzeug zu erkennen, wobei der mindestens eine Umfeldsensor dazu eingerichtet ist, einer elektronischen Steuerung des Steuerungssystems (10) die den Bereich vor, seitlich neben und/oder hinter dem eigenen Kraftfahrzeug wiedergebenden Umfelddaten bereitzustellen, und wobei das Steuerungssystem wenigstens dazu eingerichtet und bestimmt ist,

    - Information bezüglich einer aktuellen Fahrsituation des eigenen Kraftfahrzeugs (12) und zumindest eines anderen Kraftfahrzeugs basierend auf den bereitgestellten Umfelddaten zu ermitteln,
    - basierend auf der Information bezüglich der aktuellen Fahrsituation des eigenen Kraftfahrzeugs (12) und/oder des anderen Kraftfahrzeugs eine Mehrzahl lateraler Positionen zu ermitteln,
    - basierend auf der Information bezüglich der aktuellen Fahrsituation des eigenen Kraftfahrzeugs (12) und/oder des anderen Kraftfahrzeugs eine Mehrzahl longitudinaler Positionen und/oder Geschwindigkeiten zu ermitteln, und
    - aus der Mehrzahl lateraler Positionen und der Mehrzahl longitudinaler Positionen und/oder Geschwindigkeiten Haltepunkte für eine Trajektorie für das eigene Kraftfahrzeug (12) zu ermitteln, der das eigene Kraftfahrzeug (12) zum Ausführen eines Fahrmanövers folgen soll,
    **dadurch gekennzeichnet, dass** das Steuerungssystem (10) ferner dazu eingerichtet und bestimmt ist

- die Trajektorie für das eigene Kraftfahrzeug (12), mittels einer splinebasierten Interpolation zwischen den ermittelten Haltepunkten und entsprechend den lateralen Positionen an den Haltepunkten zu bestimmen, und
- die Mehrzahl lateraler Positionen und/oder die Mehrzahl longitudinaler Positionen und/oder Geschwindigkeiten für das eigene Kraftfahrzeug (12) und/oder für das andere Kraftfahrzeug in krummlinigen Koordinaten bezüglich einer dem Steuerungssystem (10) des eigenen Kraftfahrzeugs (12) durch die Umfelddaten bereitgestellten Referenzfahrspur zu bestimmen, und die Trajektorie für das eigene Kraftfahrzeug in orthogonalen Koordinaten zu überprüfen.

2. Steuerungssystem (10) nach Anspruch 1, das ferner dazu eingerichtet und bestimmt ist,

- basierend auf den bereitgestellten Umfelddaten ein Basisfahrmanöver zu ermitteln, das das eigene Kraftfahrzeug (12) ausführen soll, und
- zumindest eine der Mehrzahl lateraler Positionen basierend auf dem ermittelten Basismanöver zu bestimmen und/oder zumindest einer der lateralen Positionen einen Wert zuzuweisen, der eine Basismanöverklasse kennzeichnet, wobei die Basismanöverklasse in einem Satz von Basismanöverklassen enthalten ist, der zumindest aus Basismanövern für Spurwechsel links, Spurwechsel rechts und Spurhalten zusammengesetzt ist.

3. Steuerungssystem (10) nach einem der vorhergehenden Ansprüche, das ferner dazu eingerichtet und bestimmt ist,

- die Mehrzahl longitudinaler Positionen basierend auf einer longitudinalen Beschleunigung des eigenen Kraftfahrzeugs (12) und/oder des anderen Kraftfahrzeugs zu bestimmen.

4. Steuerungssystem (10) nach einem der vorhergehenden Ansprüche, das ferner dazu eingerichtet und bestimmt ist, die Mehrzahl longitudinaler Positionen mittels adaptiver Diskretisierung zu bestimmen, wobei eine Beschleunigung des eigenen Kraftfahrzeugs (12) und/oder des anderen Kraftfahrzeugs als Steuerparameter für die adaptive Diskretisierung verwendet wird.

5. Steuerungssystem (10) nach einem der vorhergehenden Ansprüche, das ferner dazu eingerichtet und bestimmt ist, die Bestimmung der Trajektorie für das eigene Kraftfahrzeug (12) unter Berücksichtigung einer statischen Kollisionsprüfung durchzuführen, wobei die statische Kollisionsprüfung auf der Mehrzahl lateraler Positionen des eigenen und/oder des anderen Kraftfahrzeugs basiert.

6. Steuerungssystem (10) nach einem der vorhergehenden Ansprüche, das ferner dazu eingerichtet und bestimmt ist, die Bestimmung der Trajektorie für das eigene Kraftfahrzeug (12) unter Berücksichtigung einer dynamischen Kollisionsprüfung durchzuführen, wobei die dynamische Kollisionsprüfung auf der Mehrzahl lateraler Positionen und/oder auf der Mehrzahl longitudinaler Positionen und/oder Geschwindigkeiten basiert.

7. Steuerungssystem (10) nach Anspruch 6, das ferner dazu eingerichtet und bestimmt ist, die dynamische Kollisionsprüfung unter Berücksichtigung der maximalen Beschleunigung des eigenen Kraftfahrzeugs (12) und/oder des anderen Kraftfahrzeugs durchzuführen.

8. Steuerungssystem (10) nach einem der Ansprüche 6 bis 7, das ferner dazu eingerichtet und bestimmt ist, die statische Kollisionsprüfung und/oder die dynamische Kollisionsprüfung unter Verwendung des Trennungssatzes durchzuführen.

9. Steuerungssystem (10) nach einem der vorhergehenden Ansprüche, das ferner dazu eingerichtet und bestimmt ist, die Trajektorie für das eigene Kraftfahrzeug (12) mittels einer Zielfunktion zu überprüfen, die auf einer Kostenfunktion basiert.

10. Steuerungssystem (10) nach Anspruch 9, wobei der Zielfunktion ein Zielzustand zugeordnet ist, und wobei Abweichung(en) der Zielfunktion von dem Zielzustand als Ziele der Zielfunktion verwendet werden.

11. Steuerungssystem (10) nach Anspruch 10, wobei weitere Ziele der Zielfunktion in Form der lateralen und/oder longitudinalen Beschleunigung des eigenen Kraftfahrzeugs (12) und/oder in Form des lateralen und/oder longitudinalen Rucks des eigenen Kraftfahrzeugs als Zielzustände der Zielfunktion verwendet werden.

12. Steuerungsverfahren, das in einem eigenen Kraftfahrzeug (12) basierend auf aus mindestens einem dem eigenen Kraftfahrzeug (12) zugeordneten Umfeldsensor/en (14, 16, 18) gewonnenen Umfelddaten Fahrspuren, Fahrbahnbegrenzungen, Fahrbahnmarkierungen, weitere Kraftfahrzeuge und/oder Objekte in einem Bereich vor, seitlich neben und/oder hinter dem eigenen Kraftfahrzeug (12) erkennt, wobei das Steuerungsverfahren insbesondere mittels eines Steuerungssystems (10) nach einem der vorhergehenden Ansprüche ausgeführt wird, und wobei das Steuerungsverfahren wenigstens die folgenden Schritte umfasst:

- Ermitteln von Information bezüglich einer aktuellen Fahrsituation des eigenen Kraftfahrzeugs (12) und zumindest eines anderen Kraftfahrzeugs basierend auf den bereitgestellten Umfelddaten,
- Ermitteln einer Mehrzahl lateraler Positionen basierend auf der Information bezüglich der aktuellen Fahrsituation des eigenen Kraftfahrzeugs (12) und/oder des anderen Kraftfahrzeugs,
- Ermitteln einer Mehrzahl longitudinaler Positionen und/oder Geschwindigkeiten basierend auf der Information der aktuellen Fahrsituation des eigenen Kraftfahrzeugs (12) und/oder des anderen Kraftfahrzeugs, und
- Ermitteln von Haltepunkten für eine Trajektorie für das eigene Kraftfahrzeug, der das eigene Kraftfahrzeug beim Ausführen eines Fahrmanövers folgen soll, **gekennzeichnet durch**
- Bestimmen der Trajektorie für das eigene Kraftfahrzeug (12) mittels einer splinebasierten Interpolation zwischen den ermittelten Haltepunkten und entsprechend den lateralen Positionen an den Haltepunkten,
- Bestimmen der Mehrzahl lateraler Positionen und/oder der Mehrzahl longitudinaler Positionen und/oder Geschwindigkeiten für das eigene Kraftfahrzeug (12) und/oder für das andere Kraftfahrzeug in krummlinigen Koordinaten bezüglich einer dem Steuerungssystem (10) des eigenen Kraftfahrzeugs (12) **durch** die Umfelddaten bereitgestellten Referenzfahrspur, und
- Überprüfen der Trajektorie für das eigene Kraftfahrzeug in orthogonalen Koordinaten.

13. Kraftfahrzeug, das ein Steuerungssystem gemäß einem der Ansprüche 1 bis 11 umfasst.

**Claims**

1. A control system (10) which is set up and designed for use in a subject motor vehicle (12), based on environment data obtained from at least one environment sensor (14, 16, 18) associated with the vehicle, to detect lanes, road boundaries, road markings, other motor vehicles and/or objects in a region (22, 24, 26) in front of, laterally adjacent to and/or behind the subject motor vehicle, wherein the at least one environment sensor is set up and designed to provide an electronic controller of the control system (10) with environment data reflecting the region in front of, laterally adjacent to and/or behind the subject motor vehicle, and wherein the control system is at least set up and designed to,

- determine information relating to a current driving situation of the subject motor vehicle (12) and at least one other motor vehicle on the basis of the environment data provided,
- determine a plurality of lateral positions based on the information relating to the current driving situation of the subject motor vehicle (12) and/or the other motor vehicle,
- determine a number of longitudinal positions and/or speeds based on the information relating to the current driving situation of the subject motor vehicle (12) and/or the other motor vehicle, and
- determine, from the plurality of lateral positions and the number of longitudinal positions and/or speeds, stopping points for a trajectory for the subject motor vehicle (12), which the subject motor vehicle (12) is to follow to carry out a driving maneuver,
**characterized in that** the control system (10) is further set up and designed to
- determine the trajectory for the subject motor vehicle (12) by means of a spline-based interpolation between the determined stopping points and corresponding to the lateral positions at the stopping points, and
- determine the plurality of lateral positions and/or the plurality of longitudinal positions and/or speeds for the subject motor vehicle (12) and/or for the other motor vehicle in curvilinear coordinates with respect to a reference lane provided to the control system (10) of the subject motor vehicle (12) by the environment data, and to check the trajectory for the subject motor vehicle in orthogonal coordinates.

2. The control system (10) according to claim 1, which is further set up and designed to:

- determine a basic driving maneuver based on the provided environment data, which the subject motor vehicle (12) is to carry out, and
- determine at least a plurality of lateral positions based on the determined basic maneuver and/or to assign at least one of the lateral positions a value that denotes a basic maneuver class, wherein the basic maneuver class is contained in a set of basic maneuver classes composed at least of basic maneuvers for a lane change to the left, a lane change to the right and lane keeping.

3. The control system (10) according to any one of the preceding claims, which is further set up and designed to

- determine the plurality of longitudinal positions based on a longitudinal acceleration of the subject motor vehicle (12) and/or the other motor vehicle.

4. The control system (10) according to any one of the preceding claims, which is further set up and designed to determine the plurality of longitudinal positions by means of adaptive discretization, wherein an acceleration of the subject motor vehicle (12) and/or the other motor vehicle is used as a control parameter for the adaptive discretization.

5. The control system (10) according to any one of the preceding claims, which is further set up and designed to carry out the determination of the trajectory for the subject motor vehicle (12) taking into account a static collision check, wherein the static collision check is based on the number of lateral positions of the subject motor vehicle and/or the other motor vehicle.

6. The control system (10) according to any one of the preceding claims, which is further set up and designed to determine the trajectory for the subject motor vehicle (12) taking into account a dynamic collision check, wherein the dynamic collision check is based on the plurality of lateral positions and/or on the plurality of longitudinal positions and/or speeds.

7. The control system (10) according to claim 6, which is further set up and designed to carry out the dynamic collision check taking into account the maximum acceleration of the subject motor vehicle (12) and/or the other motor vehicle.

8. The control system (10) according to any one of claims 6 to 7, which is further set up and designed to perform the static collision check and/or the dynamic collision check using the separation theorem.

9. The control system (10) according to any one of the preceding claims, which is further set up and designed to check the trajectory for the subject motor vehicle (12) by means of a target function based on a cost function.

10. The control system (10) according to claim 9, wherein a target state is assigned to the target function, and wherein deviation(s) of the target function from the target state are used as targets of the target function.

11. The control system (10) according to claim 10, wherein further targets of the target function in the form of the lateral and/or longitudinal acceleration of the subject motor vehicle (12) and/or in the form of the lateral and/or longitudinal jolt of the subject motor vehicle are used as target states of the target function.

12. A control method, which detects, in a subject motor vehicle (12) and based on environment data from at least one environment sensor (14, 16, 18) associated with the subject motor vehicle (12), lanes, road boundaries, road markings, other motor vehicles and/or objects in a region in front of, laterally adjacent to and/or behind the subject motor vehicle (12), wherein the control method is carried out in particular by means of a control system (10) according to any one of the preceding claims, and wherein the control method includes at least the following steps:

- determining information relating to a current driving situation of the subject motor vehicle (12) and of at least one other motor vehicle based on the environment data provided,
- determining a plurality of lateral positions based on information regarding the current driving situation of the subject motor vehicle (12) and/or of the other motor vehicle,
- determining a plurality of longitudinal positions and/or speeds based on information relating to the current driving situation of the subject motor vehicle (12) and/or of the other motor vehicle, and
- determining stopping points for a trajectory for the subject motor vehicle, which is to be followed by the subject motor vehicle when performing a driving maneuver, **characterized by**
- determining the trajectory for the subject motor vehicle (12) by means of a spline-based interpolation between the determined stopping points and according to the lateral positions at the stopping points,
- determining the plurality of lateral positions and/or the plurality of longitudinal positions and/or speeds for the subject motor vehicle (12) and/or for the other motor vehicle in curvilinear coordinates with respect to a reference lane provided to the control system (10) of the subject motor vehicle (12) by the environment data, and
- checking the trajectory for the subject motor vehicle in orthogonal coordinates.

**13.** A motor vehicle comprising a control system according to any one of claims 1 to 11.

**Revendications**

**1.** Système de commande (10), qui est installé et destiné à être utilisé dans un véhicule automobile (12) propre, qui, sur la base de données d'environnement obtenues à partir d'au moins un capteur/des capteurs d'environnement (14, 16, 18) associé(s) au véhicule automobile propre, détecte des voies de circulation, des limites de chaussée, des marquages de chaussée, d'autres véhicules automobiles et/ou des objets dans une zone (22, 24, 26) devant, l'au moins un capteur d'environnement étant conçu pour fournir à une commande électronique du système de commande (10) les données d'environnement reproduisant la zone devant, à côté et/ou derrière le propre véhicule automobile, et le système de commande étant conçu et déterminé au moins à cet effet,

- déterminer des informations concernant une situation de conduite actuelle du propre véhicule automobile (12) et d'au moins un autre véhicule automobile sur la base des données d'environnement mises à disposition,
- déterminer une pluralité de positions latérales sur la base de l'information concernant la situation de conduite actuelle du propre véhicule automobile (12) et/ou de l'autre véhicule automobile,
- déterminer une pluralité de positions longitudinales et/ou de vitesses sur la base de l'information concernant la situation de conduite actuelle du propre véhicule automobile (12) et/ou de l'autre véhicule automobile, et
- déterminer, à partir de la pluralité de positions latérales et de la pluralité de positions longitudinales et/ou de vitesses, des points d'arrêt pour une trajectoire pour le propre véhicule automobile (12), que le propre véhicule automobile (12) doit suivre pour exécuter une manoeuvre de conduite,
**caractérisé en ce que** le système de commande (10) est en outre conçu et déterminé pour
- déterminer la trajectoire pour le propre véhicule automobile (12) au moyen d'une interpolation basée sur les splines entre les points d'arrêt déterminés et correspondant aux positions latérales aux points d'arrêt, et
- déterminer la pluralité de positions latérales et/ou la pluralité de positions longitudinales et/ou de vitesses pour le propre véhicule automobile (12) et/ou pour l'autre véhicule automobile en coordonnées curvilignes par rapport à une voie de circulation de référence mise à disposition du système de commande (10) du propre véhicule automobile (12) par les données d'environnement, et vérifier la trajectoire pour le propre véhicule automobile en coordonnées orthogonales.

**2.** Système de commande (10) selon la revendication 1, qui est en outre agencé et destiné à

- déterminer, sur la base des données d'environnement fournies, une manoeuvre de conduite de base que le propre véhicule automobile (12) doit exécuter, et
- déterminer au moins l'une de la pluralité de positions latérales sur la base de la manoeuvre de base déterminée et/ou à attribuer à au moins l'une des positions latérales une valeur qui caractérise une classe de manoeuvre de base, la classe de manoeuvre de base étant contenue dans un ensemble de classes de manoeuvre de base qui est composé au moins de manoeuvres de base pour le changement de voie à gauche, le changement de voie à droite et le maintien de la voie.

**3.** Système de commande (10) selon l'une quelconque des revendications précédentes, qui est en outre agencé et destiné à

- déterminer la pluralité de positions longitudinales sur la base d'une accélération longitudinale de son propre véhicule automobile (12) et/ou de l'autre véhicule automobile.

**4.** Système de commande (10) selon l'une quelconque des revendications précédentes, qui est en outre adapté et destiné à déterminer la pluralité de positions longitudinales au moyen d'une discrétisation adaptative, dans lequel une accélération du propre véhicule automobile (12) et/ou de l'autre véhicule automobile est utilisée comme paramètre de commande pour la discrétisation adaptative.

**5.** Système de commande (10) selon l'une des revendications précédentes, qui est en outre agencé et destiné à effectuer la détermination de la trajectoire pour le véhicule automobile propre (12) en tenant compte d'un contrôle de collision statique, le contrôle de collision statique étant basé sur la pluralité de positions latérales du véhicule automobile propre et/ou de l'autre véhicule automobile.

**6.** Système de commande (10) selon l'une des revendications précédentes, qui est en outre agencé et destiné à effectuer la détermination de la trajectoire pour le véhicule automobile propre (12) en tenant compte d'un contrôle dynamique de collision, le contrôle dynamique de collision étant basé sur la pluralité de positions latérales et/ou sur la pluralité de positions longitudinales et/ou de vitesses.

7. Système de commande (10) selon la revendication 6, qui est en outre agencé et destiné à effectuer le contrôle dynamique de collision en tenant compte de l'accélération maximale de son propre véhicule automobile (12) et/ou de l'autre véhicule automobile.

8. Système de commande (10) selon l'une quelconque des revendications 6 à 7, qui est en outre agencé et destiné à effectuer le test de collision statique et/ou le test de collision dynamique en utilisant l'ensemble de séparation.

9. Système de commande (10) selon l'une des revendications précédentes, qui est en outre agencé et destiné à vérifier la trajectoire pour le véhicule automobile propre (12) au moyen d'une fonction cible qui est basée sur une fonction de coût.

10. Système de commande (10) selon la revendication 9, dans lequel un état cible est associé à la fonction cible, et dans lequel un ou des écarts de la fonction cible par rapport à l'état cible sont utilisés comme objectifs de la fonction cible.

11. Système de commande (10) selon la revendication 10, dans lequel d'autres objectifs de la fonction cible sous la forme de l'accélération latérale et/ou longitudinale du propre véhicule automobile (12) et/ou sous la forme de la secousse latérale et/ou longitudinale du propre véhicule automobile sont utilisés comme états cibles de la fonction cible.

12. Procédé de commande qui, dans un véhicule automobile propre (12), en se basant sur des données d'environnement obtenues à partir d'au moins un ou plusieurs capteurs d'environnement (14, 16, 18) associés au véhicule automobile propre (12), reconnaît des voies de circulation, des limites de chaussée, des marquages de chaussée, d'autres véhicules automobiles et/ou des objets dans une zone devant, latéralement à côté et/ou derrière le véhicule automobile propre (12), le procédé de commande étant exécuté en particulier au moyen d'un système de commande (10) selon l'une des revendications précédentes, et le procédé de commande comprenant au moins les étapes suivantes:

- détermination d'informations concernant une situation de conduite actuelle du propre véhicule automobile (12) et d'au moins un autre véhicule automobile sur la base des données d'environnement mises à disposition,
- détermination d'une pluralité de positions latérales sur la base de l'information concernant la situation de conduite actuelle du propre véhicule automobile (12) et/ou de l'autre véhicule automobile,
- détermination d'une pluralité de positions longitudinales et/ou de vitesses sur la base des informations relatives à la situation de conduite actuelle du propre véhicule automobile (12) et/ou de l'autre véhicule automobile, et
- détermination de points d'arrêt pour une trajectoire pour le propre véhicule automobile, que le propre véhicule automobile doit suivre lors de l'exécution d'une manoeuvre de conduite,
**caractérisé par**
- détermination de la trajectoire pour le propre véhicule automobile (12) au moyen d'une interpolation basée sur les splines entre les points d'arrêt déterminés et correspondant aux positions latérales aux points d'arrêt,
- détermination de la pluralité de positions latérales et/ou de la pluralité de positions longitudinales et/ou de vitesses pour le propre véhicule automobile (12) et/ou pour l'autre véhicule automobile en coordonnées curvilignes par rapport à une voie de circulation de référence mise à disposition du système de commande (10) du propre véhicule automobile (12) par les données d'environnement, et
- vérification de la trajectoire pour le propre véhicule automobile en coordonnées orthogonales.

13. Véhicule automobile comprenant un système de commande selon l'une quelconque des revendications 1 à 11.

**Fig. 1**

**Fig. 2**

**Fig. 3**

lineare Diskretisierung $\zeta_{lin} = 20$

**Fig. 4**

Legend: × $a_{akt} = -2$   + $a_{akt} = 0$

y-axis: adaptive Diskretisierung

**Fig. 5**

Fig. 6

Fig. 7

**Fig. 8**

Keine Kollision

28

12

$E_x$ [m]

$E_y$ [m]

**Fig. 9**

28

12

Trennachse

**Fig. 10**

Fig. 11

**Fig. 12**

**Fig. 13**

Fig. 14

**Fig. 15**

EP 3 873 784 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016205442 A1
- DE 102015217891 A
- DE 102016211129 A1

**In der Beschreibung aufgeführte Nicht-Patentliteratur**

- **T. SARTINI et al.** A resolution-adaptive strategy for probabilistic motion planning. *World Automation Congress, 2002, Proceedings of the 5th Biannual June 9-13, 2002,* 01. Januar 2002, 591-596